(19) Europäisches Patentamt
European Patent Office
Office européen des brevets

(11) **EP 3 179 288 B1**

(12) **EUROPÄISCHE PATENTSCHRIFT**

(45) Veröffentlichungstag und Bekanntmachung des Hinweises auf die Patenterteilung:
**26.04.2023   Patentblatt 2023/17**

(21) Anmeldenummer: **16200973.2**

(22) Anmeldetag: **28.11.2016**

(51) Internationale Patentklassifikation (IPC):
**G02B 27/00** (2006.01)    **G02B 21/36** (2006.01)

(52) Gemeinsame Patentklassifikation (CPC):
**G02B 21/367; G02B 21/0048; G02B 21/008; G02B 21/025; G02B 27/0075; H04N 13/221; H04N 13/254**

(54) **LICHTFELD-BILDGEBUNG MIT SCANOPTIK**

LIGHT FIELD IMAGING WITH SCAN LENS

IMAGERIE À CHAMP LUMINEUX COMPRENANT UNE OPTIQUE DE BALAYAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.12.2015   DE 102015121403**

(43) Veröffentlichungstag der Anmeldung:
**14.06.2017   Patentblatt 2017/24**

(73) Patentinhaber: **Carl Zeiss Microscopy GmbH 07745 Jena (DE)**

(72) Erfinder:
- **SINGER, Wolfgang**
  **73431 Aalen (DE)**
- **WOLLESCHENSKY, Ralf**
  **07743 Jena (DE)**
- **KLEPPE, Ingo**
  **07749 Jena (DE)**
- **JABBOUR, Toufic**
  **73447 Oberkochen (DE)**
- **GÖLLES, Michael**
  **07745 Jena (DE)**
- **WICKER, Kai**
  **07743 Jena (DE)**

(74) Vertreter: **Neusser, Sebastian Kraus & Weisert Patentanwälte PartGmbB Thomas-Wimmer-Ring 15 80539 München (DE)**

(56) Entgegenhaltungen:
**DE-A1-102013 015 931     US-A1- 2008 266 655**

- **MATTHEW B. BOUCHARD ET AL: "Swept confocally-aligned planar excitation (SCAPE) microscopy for high-speed volumetric imaging of behaving organisms", NATURE PHOTONICS, Bd. 9, Nr. 2, 19. Januar 2015 (2015-01-19) , Seiten 113-119, XP055327154, UK ISSN: 1749-4885, DOI: 10.1038/nphoton.2014.323**

**Beschreibung**

TECHNISCHES GEBIET

Verschiedene Ausführungsformen der Erfindung betreffen eine optische Vorrichtung und ein korrespondierendes Verfahren. Insbesondere betreffen verschiedene Ausführungsformen der Erfindung Techniken, um basierend auf einem dreidimensionalen Lichtfeld, welches durch Messdaten für eine Vielzahl von Scanpositionen einer Scanoptik repräsentiert wird, eine räumlich aufgelöste Abbildung eines Objekts zu erzeugen, die mindestens zwei Bilder aus unterschiedlichen Objektebenen des Objekts umfasst. Die unterschiedlichen Objektebenen können einen Abstand aufweisen, der größer ist als die Tiefenschärfe, die durch eine Blende einer Abbildungsoptik der optischen Vorrichtung definiert wird.

HINTERGRUND

Mittels der Lichtfeld-Bildgebung ist es möglich, eine räumlich aufgelöste Abbildung eines Objekts zu erzeugen, wobei die räumlich aufgelöste Abbildung mindestens zwei Bilder aus unterschiedlichen Objektebenen des Objekts umfasst. Typischerweise können die mindestens zwei Bilder Objektebenen entsprechen, die einen vergleichsweise großen Abstand zueinander aufweisen. Mittels der Lichtfeld-Bildgebung kann es insbesondere möglich sein, eine räumlich aufgelöste Abbildung zu erzeugen, d.h. eine Abbildung mit Tiefeninformation. Eine räumlich aufgelöste Abbildung wird auch als dreidimensionale (3D) Abbildung bezeichnet. Bei der räumlich aufgelösten Abbildung entsprechen die verschiedenen Bilder Objektebenen, die einen Abstand aufweisen, der größer als die Tiefenschärfe einer Abbildungsoptik ist.

Es sind Techniken der Lichtfeld-Bildgebung bekannt, welche auf der Verwendung einer Anordnung von Mikrolinsen (Mikrolinsenarray) beruhen, siehe beispielsweise US 2014/0263963 A1. Solche Techniken weisen bestimmte Nachteile und Einschränkungen auf.

Beispielsweise werden Messdaten erfasst, die aufgrund der ortsfesten Anordnung der Mikrolinsen einer Abtastung des Lichtfelds mit fest vorgegebenen Abständen entsprechen. Typischerweise weist die durch die Abtastung induzierte Diskretisierung des Lichtfelds eine vergleichsweise geringe Ortsauflösung auf.

Darüber hinaus können Mikrolinsen mit vergleichsweise geringen Fresnel-Zahlen zusätzliche Streueffekte bewirken. Dies trifft insbesondere für solche Objekte zu, die sich weit entfernt von einer Objektebene einer verwendeten Abbildungsoptik befinden. Dies bedeutet, dass die zur Erzeugung der Abbildung des Objekts verwendete wellenoptische Rekonstruktionstechnik typischerweise vergleichsweise kompliziert implementiert werden muss. Dies kann eine Anforderung an vorgehaltene Rechenkapazitäten erhöhen bzw. eine Genauigkeit bei der Rekonstruktion reduzieren.

Typischerweise weisen die verwendeten Mikrolinsen eine vergleichsweise große Fokuslänge auf. Deshalb kann das Lichtfeld, welches durch eine Anordnung von Mikrolinsen gesammelt wird, keine konstante Auflösung als Funktion der Tiefe aufweisen; insbesondere nahe einer Bildebene kann die Auflösung besonders gering sein. Die Fokuslänge einer Mikrolinse kann aufgrund der Herstellung der Mikrolinse nicht einfach reduziert werden.

Typischerweise bedingt die Lichtfeld-Bildgebung mittels einer Anordnung von Mikrolinsen einen Detektor, der eine große Anzahl von Bildpunkten aufweist. Deshalb werden bei der herkömmlichen Lichtfeld-Bildgebung typischerweise Detektoren verwendet, die einen CCD-Sensor (engl. charge coupled device, CCD) aufweisen. Jedoch können CCD-Sensoren eine vergleichsweise geringe Sensitivität aufweisen, wodurch eine Lichtintensität vergleichsweise groß gewählt werden muss. Das kann bei lichtempfindlichen Proben, beispielsweise biologischen Zellkulturen, zu Nachteilen führen. Außerdem kann die Bildqualität der räumlichen Abbildung leiden.

Bouchard, Matthew B., et al. "Swept confocally-aligned planar excitation (SCAPE) microscopy for high-speed volumetric imaging of behaving organisms." Nature photonics 9.2 (2015): 113-119 offenbart eine dreidimensionale Mikroskopietechnik, die volumetrische Bildgebung von lebenden Proben bei schnellen Geschwindigkeiten ermöglicht. Im Gegensatz zur konventionellen Lichtblattmikroskopie erfasst die dort dargestellte Technik Bilder unter Verwendung eines angewinkelten, abtastenden Lichtblatts. Eine konfokale Scan- und Bildrotationsoptik bildet die bewegte Ebene auf eine stationäre Kamera ab.

DE 10 2013 015 931 A1 offenbart im Zusammenhang mit Fig. 9 ein Laser-Scanning-Mikroskop, welches eine Scan-Einrichtung umfasst. Ein Mikrolinsen-Array 64 ist offenbart. Das Mikrolinsen-Array 64 fokussiert ortsaufgelöst die Lichtverteilung 53 auf ein Faserbündel-Array 65.

ZUSAMMENFASSUNG

Deshalb besteht ein Bedarf für verbesserte Techniken der Lichtfeld-Bildgebung. Insbesondere besteht ein Bedarf für solche Techniken der Lichtfeld-Bildgebung, welche zumindest einige der oben genannten Nachteile und Einschränkungen beheben. Insbesondere besteht ein Bedarf für genaue und optisch einfach zu implementierende Techniken der Lichtfeld-Bildgebung.

Diese Aufgabe wird von den Merkmalen der unabhängigen Patentansprüche gelöst. Die Merkmale der abhängigen Patentansprüche definieren Ausführungsformen.

Gemäß einem Aspekt betrifft die vorliegende Erfindung eine optische Vorrichtung zur Lichtfeld-Bildgebung nach Anspruch 1. Die optische Vorrichtung umfasst eine Lichtquelle. Die Lichtquelle ist eingerichtet, um Licht entlang eines optischen Pfads auszusenden. Die optische Vorrichtung umfasst auch einen Detektor und einem Probenhalter. Der Probenhalter ist im optischen Pfad hinter der Lichtquelle und vor dem Detektor angeordnet. Der Probenhalter ist eingerichtet, um ein Objekt in dem optischen Pfad von Licht zu fixieren. Die optische Vorrichtung umfasst auch eine Scanoptik. Die Scanoptik ist im optischen Pfad hinter dem Probenhalter und vor dem Detektor angeordnet. Die Scanoptik ist eingerichtet, um für eine Vielzahl von Scanpositionen jeweils selektiv Licht, welches aus unterschiedlichen Winkelbereichen vom Objekt einfällt, auf den Detektor zu lenken. Der Detektor ist eingerichtet, um für jede der Vielzahl von Scanpositionen Messdaten zu umfassen. Die optische Vorrichtung umfasst auch eine Recheneinheit, die mit dem Detektor gekoppelt ist. Die Recheneinheit ist eingerichtet, um basierend auf einem dreidimensionalen Lichtfeld, welches durch die Messdaten der Vielzahl von Scanpositionen repräsentiert wird, eine räumlich aufgelöste Abbildung des Objekts zu erzeugen. Die räumlich aufgelöste Abbildung des Objekts umfasst mindestens zwei Bilder aus unterschiedlichen Objektebenen des Objekts.

Zum Beispiel kann die optische Vorrichtung eine Mikroskopievorrichtung sein. Zum Beispiel kann die optische Vorrichtung weiterhin eine Abbildungsoptik umfassen, die eingerichtet ist, um ein Zwischenbild des Objekts in einer Bildebene zu erzeugen, welches einen Vergrößerungsfaktor von >1 aufweist. Die optische Vorrichtung kann zum Beispiel zur Fluoreszenz-Bildgebung eingerichtet sein. In einem solchen Fall können besonders lichtempfindliche Proben abgebildet werden.

Zum Beispiel kann die optische Vorrichtung in Transmissionsgeometrie oder Reflexionsgeometrie implementiert sein. Zum Beispiel wäre es möglich, dass die optische Vorrichtung als Laser-Scanning-Mikroskop ausgebildet ist. Zum Beispiel kann die Lichtquelle monochromatisches Licht oder polychromatisches Licht aussenden.

In verschiedenen beispielhaften Implementierungen können unterschiedliche Scanoptiken verwendet werden. In verschiedenen Varianten kann die Scanoptik zum Beispiel einen oder zwei oder mehrere bewegliche Scanspiegel umfassen. Z.B. können die Scanpositionen unterschiedlichen Winkeleinstellungen der beweglichen Scanspiegel entsprechen. Dazu können die Scanspiegel verkippbar sein. In weiteren Szenarien könnte die Scanoptik auch lateral - d.h. senkrecht zum optischen Pfad - verschiebbare optische Elemente umfassen.

Das selektive Lenken von Licht auf den Detektor kann zum Beispiel bedeuten, dass Licht, welches außerhalb eines mit der bestimmten Scanposition assoziierten Feldbereichs liegt, nicht auf den Detektor gelenkt wird bzw. nicht auf den Detektor gelangt. Dazu wäre es zum Beispiel möglich, dass die optische Vorrichtung eine Feldblende umfasst, die in einer Bildebene der Scanoptik angeordnet ist. Die Feldblende kann eine Öffnung aufweisen, welche einen Strahldurchmesser des Lichts begrenzt. Mittels solcher Techniken kann es also möglich sein, für jede Scanpositionen einen bestimmten Bereich des Lichtfelds (Feldbereich) abzutasten. Unter dem Feldbereich ist also z.B. der durch die Öffnung der Feldblende begrenzte Ortsbereich zu verstehen, zu dem jeweils selektiv Licht aus einem entsprechenden Winkelbereich auf den Detektor gelenkt wird. Dabei kann ein mit einer Scanposition assoziierter Winkelbereich (Winkelauflösung) z.B. eine Größe von weniger als 10° aufweisen, oder bevorzugt von weniger als 1°, besonders bevorzugt von weniger als 0,1 °. Eine größere Winkelauflösung kann eine größere Auflösung bewirken, mit der das Lichtfeld abgetastet wird.

Zum Erzeugen der räumlich aufgelösten Abbildung basierend auf dem 3D Lichtfeld, welches durch die Messdaten der Vielzahl von Scanpositionen repräsentiert wird, können verschiedene Techniken eingesetzt werden, die grundsätzlich aus der Literatur bekannt sind. Zum Beispiel ist aus US 2014/0263963 A1 das Erzeugen der räumlich aufgelösten Abbildung des Objekts auf Grundlage von Messdaten, die mittels der Mikrolinsen-Anordnung erfasst wurden, bekannt. Solche Techniken können auch für das Erzeugen der Abbildung im vorliegenden Fall verwendet werden.

Z.B. können die Scanpositionen eng beieinander liegen oder es kann eine vergleichsweise kleine Feldblende verwendet werden. Die Winkelauflösung kann derart groß sein. Dadurch können Messdaten für viele, eng beieinanderliegende Feldbereiche erfasst werden. Durch das Verwenden der Scanoptik kann - zum Beispiel je nach Anzahl der verwendeten Scanpositionen - eine besonders hohe laterale Ortsauflösung beim Abtasten des Lichtfelds erreicht werden. Insbesondere ist es möglich, dass ein Abstand benachbarter Mikrolinsen, die in der üblichen Implementierungen einer entsprechenden optischen Vorrichtung zur Aufnahme eines Lichtfeldes verwendet werden, nicht limitierend für die Ortsauflösung beim Abtasten des Lichtfelds ist. Durch das Erreichen einer hohen Ortsauflösung beim Abtasten des Lichtfelds kann wiederum eine besonders genaue und hochaufgelöste 3D Abbildung des Objekts erzeugt werden.

Es kann auch eine besonders hohe Auflösung entlang der optischen Achse erreicht werden (Tiefenauflösung). Insbesondere ist es möglich, dass eine Abbildung des Objekts erzeugt wird, welche eine große Anzahl von Bildern aus den benachbarten Objektebenen des Objekts umfasst; gleichzeitig können die extremalen, durch Bilder der Abbildung repräsentierten Objektebenen des Objekts einen großen Abstand zueinander aufweisen.

Darüber hinaus kann es möglich sein, die Anzahl der verwendeten Scanpositionen je nach Bedarf anzupassen.

Z.B. kann die Anpassung in Abhängigkeit der zum Erfassen aller Messdaten benötigten Zeitspanne (Messdauer) geschehen. Derart kann zum Beispiel bei Anwendungen, bei denen eine besonders schnelle Erzeugung der Abbildung des Objekts erwünscht ist, mittels einer geringeren Anzahl von Scanpositionen die Messdauer reduziert werden; dies kann jedoch bedingen, dass die Ortsauflösung beim Abtasten des Lichtfelds vergleichsweise gering ist. Eine geringe Messdauer kann insbesondere bei lichtempfindlichen Objekten oder zur Erstellung von groben Übersichtsbildern erstrebenswert sein.

Beispielsweise könnte die optische Vorrichtung eine Abbildungsoptik umfassen, die im optischen Pfad angeordnet ist, z.B. hinter dem Probenhalter und vor der Scanoptik. Die Abbildungsoptik kann als Objektiv implementiert sein. In verschiedenen Beispielen ist es möglich, dass die Abbildungsoptik eine variable Brennweite hat, d.h. als Zoom-Optik implementiert ist. Dadurch kann es möglich sein, Abbildungen von Objekten unterschiedlicher Größen zu erzeugen. Außerdem kann, zum Beispiel in einem Fall in dem die optische Vorrichtung als Mikroskopie-Vorrichtung ausgebildet ist, ein unterschiedlicher Vergrößerungsfaktor implementiert werden.

Die Abbildungsoptik kann eine Abbildung des Objekts mit einer bestimmten Tiefenschärfe bewirken. Die Tiefenschärfe kann gegeben sein durch eine objektseitige Blendenöffnung der Abbildungsoptik. Zum Beispiel kann die Tiefenschärfe durch eine Wellenlänge des von der Lichtquelle entlang des optischen Pfads ausgesendeten Lichts bestimmt sein. Zum Beispiel könnte die Tiefenschärfe proportional zur Wellenlänge des ausgesendeten Lichts sein und invers proportional zum Quadrat der objektseitigen Blendenöffnung der Abbildungsoptik.

Im Rahmen der Lichtfeld-Bildgebung ist es dann möglich, dass die mindestens zwei Bilder der räumlichen Abbildung des Objekts einen Abstand zueinander aufweisen, der größer als die Tiefenschärfe ist.

Mittels Techniken der Lichtfeld-Bildgebung kann es also möglich sein, besonders viel Information über das abgebildete Objekt in der Abbildung zu beinhalten. Insbesondere kann es möglich sein, durch das Berücksichtigen der mindestens zwei Bilder, die aus unterschiedlichen Objektebenen des Objekts Informationen umfassen, nachträglich einen Schärfepunkt einer grafischen Wiedergabe der Abbildung zu verändern. Ferner kann es möglich sein, ein Tiefenprofil des Objekts - d.h. parallel zum optischen Pfad - basierend auf der Abbildung zu bestimmen.

Es wäre zum Beispiel möglich, dass der Detektor einen Photomultiplier umfasst. Zum Beispiel könnte der Photomultiplier eine Vielzahl von Bildpunkten umfassen, z.B. weniger als 20 Bildpunkte. Z.B. könnte der Photomultiplier weniger als 50 oder weniger als 250 Bildpunkte umfassen. Typischerweise kann der Photomultiplier z.B. pro Bildpunkt eine Photokathode mit einem nachgeschalteten Sekundärelektronenvervielfacher umfassen. Zum Beispiel können die Bildpunkte des Photomultipliers vergleichsweise groß sein, zum Beispiel verglichen mit Bildpunkten eines CCD-Sensors. Beispielsweise könnten die Bildpunkte Abmessungen aufweisen, die eine Seitenlänge von mehr als 100 $\mu$m oder größer aufweisen.

Typischerweise kann es möglich sein, dass der Photomultiplier eine besonders große Sensitivität aufweist. Aufgrund der vergleichsweise geringen Anzahl von Bildpunkten des Photomultipliers kann es möglich sein, besonders sensitive Detektoren zu verwenden. Dadurch kann es möglich sein, Lichtquellen mit vergleichsweise geringer Intensität einzusetzen. Dadurch kann insbesondere bei Anwendungen, welche eine geringe Lichtbelastung erfordern - wie beispielsweise die Fluoreszenz-Bildgebung - trotz der geringen Intensität der Lichtquelle eine rauschfreie Abbildung des Objekts erzeugt werden. Insgesamt kann es möglich sein, eine Belichtungszeit pro Scanposition vergleichsweise gering zu wählen und dadurch die Messdauer zu reduzieren.

In verschiedenen Beispielen kann es möglich sein, dass der Detektor für jeden Bildpunkt des einen Lichtwellenleiter ein dem Probenhalter zugewendeten erstes Ende und ein dem jeweiligen Bildpunkt zugewendetes zweites Ende umfasst. Die Lichtwellenleiter können zum Beispiel jeweils einen Durchmesser von weniger als einer Airy-Einheit aufweisen, bevorzugt von weniger als 0,5 Airy-Einheiten, besonders bevorzugt von weniger als 0,2 Airy-Einheiten. In verschiedenen Szenarien kann der Photomultiplier ein Bildpunktarray umfassen. Es wäre aber auch möglich, dass die Bildpunkte vereinzelt ausgebildet sind, also kein Bildpunktarray ausbilden. Typischerweise können Photomultiplier vergleichsweise groß sein und die einzelnen Bildpunkte können besonders weit beabstandet sein. Deshalb kann es mittels der Lichtwellenleiter möglich sein, Licht auf die Bildpunkte zu führen; insbesondere ist es möglich, die Lichtwellenleiter enger zu packen als die Bildpunkte. Vor den Lichtwellenleitern können sich Mikrolinsen befinden, um möglichst viel Licht einzusammeln. Herkömmliche Bildpunkte von Vielkanaldetektoren wie CCD-Sensoren, die für die Lichtfeld-Bildgebung verwendet werden, sind typischerweise weniger als 10 $\mu$m im Durchmesser groß. Z.B. wäre es möglich, dass die Lichtwellenleiter einen Durchmesser von z.B. mehr als 20 $\mu$m oder mehr als 100 $\mu$m oder mehr als 250 $\mu$m aufweisen.

Jedem Bildpunkt des Detektors kann also jeweils eine Mikrolinse zugeordnet sein, die das Licht aus dem entsprechenden Winkelbereich auf einem Detektor bündelt. Z.B. könnte die jeweilige Mikrolinse vor dem ersten Ende eines entsprechenden Lichtwellenleiters angeordnet sein.

Durch das Verwenden einer entsprechenden Detektor-Geometrie oder insbesondere der den Bildpunkten zugeordneten Mikrolinsen kann erreicht werden, dass besonders dicht gepackte effektive Bildpunkte implementiert werden können. Dadurch kann eine besonders hohe Sammeleffizienz von bevorzugt über 80 %, besonders bevorzugt über 90 % erreicht werden. Über die hohe Sammeleffizienz kann ein hohes Signal-zu-Rauschverhältnis und damit eine hohe Auflösung in lateraler Richtung beim Abtasten des Lichtfelds erreicht werden. Dadurch kann eine besonders hohe Tiefenauflösung erreicht werden.

Die optische Vorrichtung umfasst weiterhin eine Kollimatoroptik. Dabei ist die Kollimatoroptik im optischen Pfad hinter dem mindestens einen Scanspiegel der Scanoptik und vor dem Detektor angeordnet. Durch das Vorsehen der Kollimatoroptik wird eine Abbildung der Pupillenebene des Abbildungssystems auf eine Detektorfläche des Detektors erreicht .

Dabei entspricht ein Abstand zwischen der Kollimatoroptik und dem Detektor einer Brennweite der Kollimatoroptik. Der Detektor ist also in der hinteren Brennebene der Kollimatoroptik angeordnet. Insbesondere kann mittels der Kollimatoroptik erreicht werden, dass die Detektorfläche des Detektors für jede der Vielzahl von Scanpositionen im Wesentlichen komplett ausgeleuchtet wird. Dadurch kann es möglich werden, mittels der Detektorsignale der verschiedenen Bildpunkte des Detektors für jede der Vielzahl von Scanpositionen das Lichtfeld umfassend abzutasten.

Beispielsweise könnte die Kollimatoroptik aplanatisch ausgebildet sein. Durch das Vorsehen der aplanatischen Kollimatoroptik kann eine vorteilhafte Abbildungsbedingung erfüllt werden. Insbesondere kann die Abbe'sche Sinus-Bedingung erfüllt werden, was wiederum ein besonders einfaches Erzeugen der Abbildung des Objekts mittels Techniken der Lichtfeld-Bildgebung ermöglicht

Es kann erstrebenswert sein, die optische Vorrichtung derart auszugestalten, dass sie mit unterschiedlichen Hardware-Konfigurationen betrieben werden kann. Derart kann zum Beispiel in einem ersten Betriebsmodus eine Lichtfeld-Bildgebung (Lichtfeld-Betriebsmodus) erreicht werden, und in einem zweiten Betriebsmodus eine anderweitige Bildgebung erreicht werden, beispielsweise eine Laser-Scanning-Bildgebung (Laser-Scanning-Betriebsmodus). Die Laser-Scanning-Bildgebung kann beispielsweise mit einer konfokalen Lochblende zur Implementierung einer großen Tiefenauflösung ausgelegt sein.

Diesbezüglich wäre es zum Beispiel möglich, dass die optische Vorrichtung eine bewegliche Bühne umfasst, auf der unterschiedliche optische Elemente, wie zum Beispiel die voranstehend beschrieben optischen Elemente, angeordnet sind. Dann könnte es möglich sein, je nach Betriebsmodus, unterschiedliche optische Elemente durch Verstellen der beweglichen Bühne in den optischen Pfad hinein oder aus dem optischen Pfad heraus zu bewegen. Dazu kann die Bühne zwischen einer ersten Position und einer zweiten Position und optional weiteren Positionen bewegbar sein.

Zum Beispiel wäre es möglich, dass die Kollimatoroptik mit der beweglichen Bühne gekoppelt ist. Dann wäre es möglich, dass die Kollimatoroptik in der ersten Position der beweglichen Bühne im optischen Pfad positioniert ist und in der zweiten Position der beweglichen Bühne nicht im optischen Pfad positioniert ist. Derart könnte es möglich sein, dass insbesondere in der ersten Position der Lichtfeld-Betriebsmodus implementiert wird. In der zweiten Position der beweglichen Bühne könnten andere Bildgebungstechniken zum Erzeugen der Abbildung des Objekts durchgeführt werden, beispielsweise könnte der Laser-Scanning-Betriebsmodus durchgeführt werden.

Beispielsweise wäre es möglich, dass die Kollimatoroptik als Zoom-Optik ausgebildet ist. Es wäre dann zum Beispiel möglich, dass die Zoom-Optik eingerichtet ist, um eine Pupillenebene, insbesondere eine Ausgangspupille der Scanoptik mit variabler Brennweite auf den Detektor abzubilden. Die Zoom-Optik kann insbesondere als Optik mit variabler Brennweite ausgelegt sein, wobei die axialen Abstände von Objektfeld - der Feldblende - und Bildfeld unverändert bleiben. Solche Zoom-Optiken sind beispielsweise als mindestens zweistufige Zooms ausgeführt, wobei mit einer Zoomstufe die Brennweite variiert wird und mit einer weiteren Zoomstufe der Abstand zwischen Objektebene und Pupillenebene konstant gehalten wird.

Wenn die Kollimatoroptik als Zoom-Optik ausgebildet ist, kann erreicht werden, dass auch für Abbildungsoptiken der optischen Vorrichtung, die eine variable Brennweite aufweisen, die Anordnung von Bildpunkten des Detektors für die verschiedenen Brennweiten der Abbildungsoptik möglichst umfassend ausgeleuchtet wird.

Zum Beispiel könnte auch die Feldblende mit der beweglichen Bühne gekoppelt sein. Die Feldblende könnte in der ersten Position der beweglichen Bühne im optischen Pfad positioniert sein und in der zweiten Position der beweglichen Bühne nicht im optischen Pfad positioniert sein.

Die Öffnung der Feldblende kann insbesondere den Feldbereich definieren, der für jede der Vielzahl von Scanpositionen auf den Detektor gelenkt wird. Dabei können kleinere (größere) Öffnungen kleineren (größeren) Feldbereichen entsprechen und damit einer größeren (kleineren) Ortsauflösung der räumlichen Abbildung bzw. einer geringeren (größeren) Messdauer.

Zum Beispiel wäre es möglich, dass die Öffnung der Feldblende und/oder die Vielzahl der Scanpositionen derart eingerichtet sind, dass mindestens zwei Scanpositionen überlappende Feldbereiche aufweisen. Dies kann also bedeuten, dass für die mindestens zwei Scanpositionen Licht aus dem überlappenden Feldbereich auf den Detektor gelenkt wird. Dies bedeutet, dass die Lichtfelder, die den jeweiligen Messdaten zugrunde liegen, überlappen können. Mittels solcher Techniken kann eine besonders umfassende Abtastung des Lichtfelds erfolgen. Dadurch kann eine besonders genaue Abbildung des Objekts erzeugt werden.

In weiteren Beispielen wäre es möglich, dass die Öffnung der Feldblende und/oder die Vielzahl der Scanpositionen derart eingerichtet sind, dass die Vielzahl der Scanpositionen keine überlappenden oder beabstandete Feldbereiche aufweisen. Dadurch kann ein besonders schnelles Abtasten des Lichtfelds erfolgen. Die Messdauer kann reduziert werden. Gleichzeitig kann eine Genauigkeit, mit der die Abbildung des Objekts erzeugt wird, reduziert werden.

Eine Exposition des Objekts gegenüber Licht kann reduziert werden.

In verschiedenen Beispielen ist es möglich, dass die Öffnung der Feldblende in mindestens einer Richtung einen veränderbaren Durchmesser aufweist. Zum Beispiel kann es möglich sein, in unterschiedlichen Betriebsmodi unterschiedliche Durchmesser der Öffnung der Feldblende einzustellen. Z.B. können für die Lichtfeld-Bildgebung unterschiedliche Betriebsmodi mit unterschiedlichen Ortsauflösungen assoziiert sein. Z.B. kann der veränderbare Durchmesser der Öffnung ermöglichen, sodass die Feldblende für den Laser-Scanning-Betriebsmodus eine konfokale Lochblende mit besonders geringem Durchmesser implementiert. Für den Lichtfeld-Betriebsmodus können größere Durchmesser der Öffnung der Feldblende verwendet werden.

Zum Beispiel kann die Feldblende - zumindest im Lichtfeld-Betriebsmodus - eine Öffnung mit einem Durchmesser aufweisen, der im Bereich von 2-20 Airy-Einheiten liegt, vorzugsweise im Bereich von 3-8 Airy-Einheiten liegt, besonders bevorzugt zwischen 4 und 5 Airy-Einheiten liegt. Dies kann also bedeuten, dass die Feldblende eine Öffnung mit einem Durchmesser aufweist, der größer ist als der Durchmesser einer Öffnung einer typischen Lochblende, die zum Beispiel im Zusammenhang mit herkömmlichen Laser-Scanning-Mikroskopen eingesetzt wird.

Gemäß einem weiteren Aspekt betrifft die vorliegende Erfindung ein Verfahren. Das Verfahren umfasst das Ansteuern einer Scanoptik, die in einem optischen Pfad einer optischen Vorrichtung hinter einem Probenhalter und vor einem Detektor angeordnet ist. Das Ansteuern der Scanoptik erfolgt, um für eine Vielzahl von Scanpositionen jeweils selektiv Licht, das aus unterschiedlichen Winkelbereichen von einem Objekt einfällt, auf den Detektor zu lenken. Das Verfahren umfasst weiterhin für jede der Vielzahl von Scanpositionen: Erhalten von Messdaten von dem Detektor. Das Verfahren umfasst weiterhin, basierend auf einem 3D Lichtfeld, welches durch die Messdaten der Vielzahl von Scanpositionen repräsentiert wird: Erzeugen einer räumlich aufgelösten Abbildung des Objekts. Die räumlich aufgelöste Abbildung des Objekts umfasst mindestens zwei Bilder aus unterschiedlichen Objektebenen des Objekts.

Z.B. kann das Verfahren weiterhin das Bestimmen der Scanpositionen basierend auf einer vorgegebenen Ortsauflösung der räumlich aufgelösten Abbildung des Objekts umfassen.

Z.B. kann das Verfahren weiterhin das Ansteuern einer Feldblende umfassen, die einen in mindestens einer Richtung veränderbaren Durchmesser aufweist. Das Ansteuern kann zum Einstellen des Durchmessers erfolgen. Das Verfahren kann weiterhin das Bestimmen des Durchmessers der Feldblende basierend auf einer vorgegebenen Tiefenauflösung der räumlich aufgelösten Abbildung des Objekts umfassen.

Zum Beispiel kann das Verfahren gemäß dem gegenwärtig diskutierten Aspekt von einer optischen Vorrichtung gemäß einem weiteren Aspekt der vorliegenden Erfindung ausgeführt werden.

Deshalb können für ein Verfahren gemäß dem gegenwärtig diskutierten Aspekte Effekte erzielt werden, die vergleichbar sind mit den Effekten, die für die optische Vorrichtung gemäß dem weiteren Aspekt der vorliegenden Erfindung erzielt werden können.

Die oben dargelegten Merkmale und Merkmale, die nachfolgend beschrieben werden, können nicht nur in den entsprechenden explizit dargelegten Kombinationen verwendet werden, sondern auch in weiteren Kombinationen oder isoliert, ohne den Schutzumfang der vorliegenden Erfindung zu verlassen.

KURZE BESCHREIBUNG DER FIGUREN

FIG. 1 illustriert den Strahlengang von Licht durch eine optische Vorrichtung gemäß Referenzimplementierungen, wobei die optische Vorrichtung für die Lichtfeld-Bildgebung eingerichtet ist und ein Mikrolinsenarray umfasst.

FIG. 2 illustriert den Strahlengang von Licht durch die optische Vorrichtung gemäß FIG. 1, wobei eine Objektebene gegenüber der Bildebene versetzt ist.

FIG. 3 illustriert schematisch Effekte, die durch das Mikrolinsenarray einer optischen Vorrichtung gemäß Referenzimplementierungen auftreten können.

FIG. 4 illustriert schematisch eine optische Vorrichtung gemäß verschiedener Ausführungsformen.

FIG. 5 illustriert schematisch den Strahlengang von Licht der optischen Vorrichtung gemäß FIG. 4.

FIG. 6 illustriert schematisch den Strahlengang von Licht der optischen Vorrichtung gemäß FIG. 4 in größerem Detail als FIG. 5.

FIG. 7 illustriert schematisch den Strahlengang von Licht der optischen Vorrichtung gemäß FIG. 4 in größerem Detail als FIG. 5, wobei FIG. 7 eine Ausbildung der optischen Vorrichtung als Laser-Scanning-Mikroskop illustriert.

FIG. 8 ist ein Flussdiagramm eines Verfahrens gemäß verschiedener Ausführungsbeispiele.

FIG. 9 ist ein Flussdiagramm eines Verfahrens gemäß verschiedener Ausführungsbeispiele.

## DETAILLIERTE BESCHREIBUNG VON AUSFÜHRUNGSFORMEN

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

Nachfolgend werden Techniken zur Lichtfeld-Bildgebung erläutert. Die Lichtfeld-Bildgebung ermöglicht es, eine räumlich aufgelöste Abbildung eines Objekts zu erzeugen. Dabei bedeutet die räumlich aufgelöste Abbildung des Objekts, dass mindestens zwei Bilder aus unterschiedlichen Objektebenen des Objekts bereitgestellt werden, wobei die Objektebenen einen vergleichsweise großen Abstand zueinander aufweisen. In Beispielen können 10 oder 100 oder mehr Bilder aus unterschiedlichen Objektebenen bereitgestellt werden.

Insbesondere ist es möglich, dass bestimmte Objektebenen einen Abstand zueinander aufweisen, welcher größer ist als eine durch eine Abbildungsoptik bewirkte Tiefenschärfe. Benachbarte Objektebenen können jedoch einen Abstand zueinander aufweisen, der geringer ist als die durch die Abbildungsoptik bewirkte Tiefenschärfe.

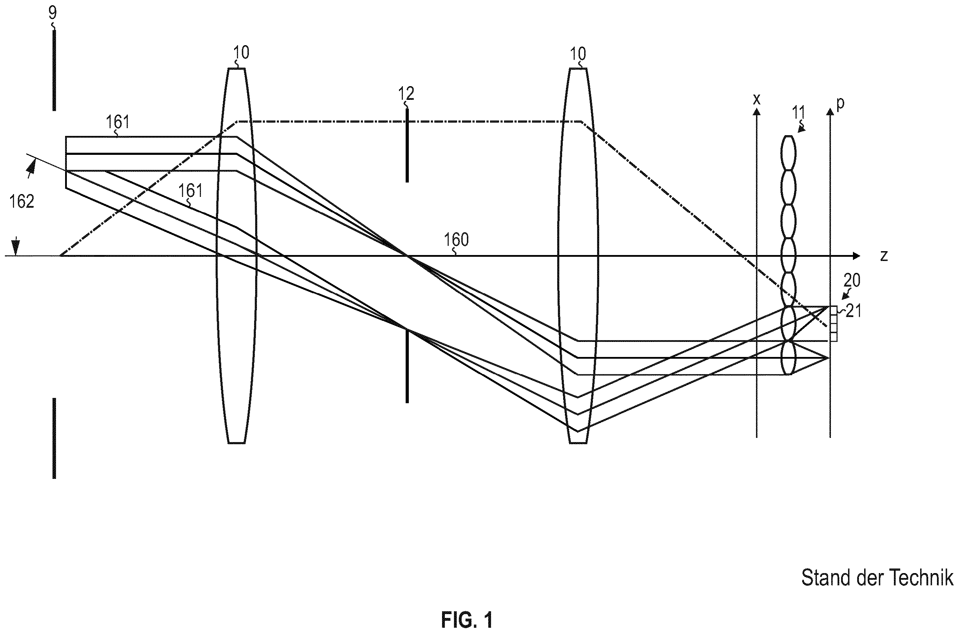

In FIG. 1 ist der Strahlengang von Licht 161 durch eine optische Vorrichtung, die für die Lichtfeld-Bildgebung gemäß Referenzimplementierungen eingerichtet ist, dargestellt. Das Licht tritt durch eine objektseitige Feldblende 9 ein und wird entlang der optischen Achse 160 (parallel zur Achse z in FIG. 1) durch Linsen 10 auf eine Anordnung von Mikrolinsen (Mikrolinsenarray) 11 abgebildet. Jede Mikrolinse des Mikrolinsenarrays 11 ist wiederum mehreren Bildpunkten 21 eines Detektors 20 zugeordnet (in FIG. 1 sind aus Gründen der Übersichtlichkeit nur die Bildpunkte 21 für eine einzige Mikrolinse gezeigt). Die Menge an Bildpunkten, die einer Mikrolinse des Mikrolinsenarrays 11 zugeordnet sind, wird typischerweise als Kanal bezeichnet.

In FIG. 1 sind insbesondere die Strahlengänge 161 für Licht dargestellt, welches unter zwei bestimmten Winkel 162 von einem Objekt (in FIG. 1 nicht gezeigt) einfällt, weswegen die Strahlengänge 161 parallel durch die Feldblende 9 treten.

Eine Implementierung der optischen Vorrichtung gemäß FIG. 1 weist zum Beispiel den Nachteil auf, dass die effektive Blende der optischen Vorrichtung durch die Blende 12 limitiert ist. Die Öffnung der Blende 12 wird begrenzt durch die Brennweite der Mikrolinsen des Mikrolinsenarrays 11. Bei einer größeren Feldblende 12 würden Strahlen, die durch Mikrolinse passieren, beispielsweise einen benachbarten Kanal des Detektors treffen (gestricheltgepunktete Linie in FIG. 1) und somit die Abbildung verfälschen. Die Größe der Feldblende 9 ist begrenzt durch die Größe des Mikrolinsenarrays 11.

Aus FIG. 1 ist ersichtlich, dass unterschiedliche Winkel durch das Mikrolinsenarray 11 auf unterschiedliche Pupillenkoordinaten p abgebildet werden, die den Bildpunkten 21 entsprechen Die Intensität wird dann über Integration über das Lichtfeld L aller Pupillenkoordinaten erhalten

$$I(x,y) = \iint L(x,y;p,q)\,dp\,dq, \tag{1}$$

wobei $p,q$ die Austritts-Pupillenkoordinaten sind (entsprechend den Bildpunkten 21) und $x,y$ die Bildebenen-Koordinaten sind. Bildebenen-Koordinaten $x,y$ entsprechen dem Raster des Mikrolinsenarrays 11. Deshalb weist das Bild $I(x,y)$ eine vergleichsweise geringe Ortsauflösung auf, die dem Mikrolinsenarray 11 entspricht. Da das Mikrolinsenarray 11 vorgegeben ist, kann die Ortsauflösung nicht einfach vergrößert werden.

Dabei definieren unterschiedliche Bildebenen-Koordinaten $p,q$ unterschiedliche Winkel bzw. Winkelbereiche, unter welchen Licht vom Objekt einfällt (vgl. FIG. 1). Durch das Verwenden des Mikrolinsenarrays 11 in Kombination mit zugeordneten Detektorbildpunkten 21 kann also gleichzeitig Licht aus einem großen Winkelbereich gesammelt werden.

Das Bild $I(x,y)$ kann für mehrere Objektebenen eines in z-Richtung ausgedehnten Objekts erhalten werden, also nicht nur für die Objektebene im Fokus der Abbildungsoptik, wie in FIG. 1 gezeigt. Insbesondere kann das Bild für Objektebenen erhalten werden, die in z-Richtung einen Abstand zu einer Fokusebene einer Abbildungsoptik aufweisen, der größer als eine Tiefenschärfe des Systems für jedes einzelne Bild $I(x,y)$ ist.

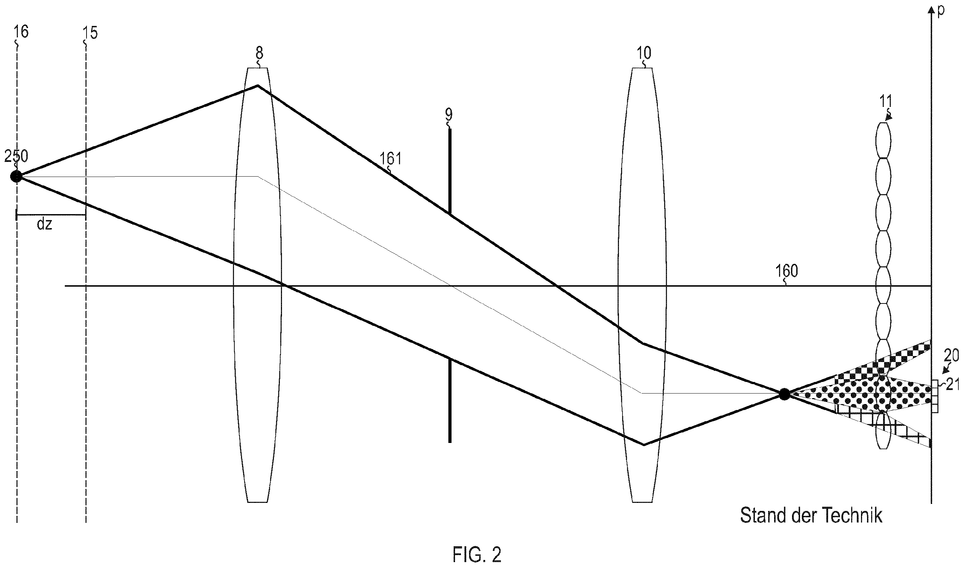

In FIG. 2 sind Aspekte betreffend die Erzeugung eines Bilds für eine gegenüber der Fokusebene 15 um dz beanstandeten Objektebene 16 illustriert. Aus FIG. 2 ist ersichtlich, dass die Pupillenkoordinate *p* für das um *dz* defokussierte Objekt 250 durch das Mikrolinsenarray 11 charakteristisch für die verschiedenen Kanäle variiert. Unter bestimmten Näherungen ergibt sich ein entsprechender Ausdruck für das Lichtfeld aus der defokussierten Bildebene *x',y'* 16 in die Fokusebene 15:

$$L(x', y', ; p, q) = L(x + dz\, p/m, y + dz\, q/m; p, q) \approx L(x + dz\, p, y + dz\, q; p, q), \qquad (2)$$

mit $m = \sqrt{n^2 - p^2 - q^2}$, wobei n die Brechzahl ist.

Eine bestimmte Näherung die in die o.g. Gl. 2 einfließt, kann insbesondere gegeben sein durch

$$\tan \alpha = \sin \alpha = \alpha, \qquad (3)$$

wobei $\alpha$ den Einfallswinkel 162 des Lichts beschreibt. Die Bedingung gemäß Gl. 3 gilt insbesondere für kleine Winkel.

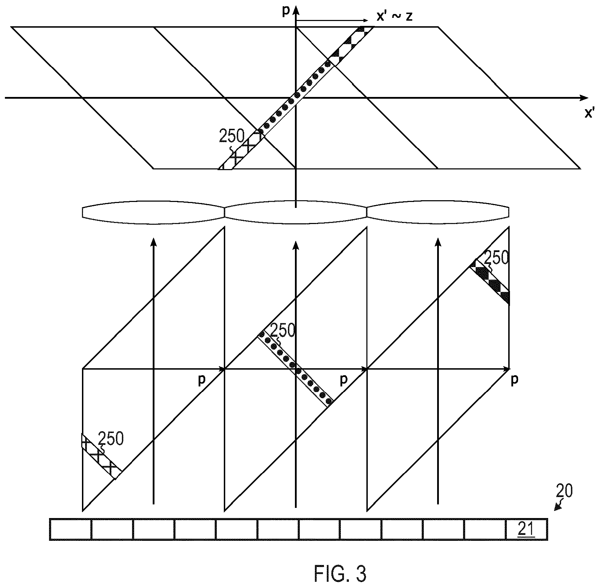

Dieser Effekt lässt sich ausnutzen, um das Bild *I(x,y)* zu erzeugen und ist auch in Bezug auf FIG. 3 illustriert. In FIG. 3, obenstehend ist die Bildebene x' dargestellt. In FIG. 3 in der Mitte ist die Mikrolinsen-Ebene dargestellt. Das Mikrolinsenarray 11 verteilt das Lichtfeld in den Kanälen und bildet lokale Spektren aus, was einer Drehung des Lichtfelds um 90° entspricht.

Diese Drehung entspricht einer Fouriertransformation der Bildebene x (in FIG. 3 oberhalb des Mikrolinsenarrays 11 dargestellt) in die Mikrolinsen-Ebene (in FIG. 3 ist ein Ausschnitt des Mikrolinsenarrays 11 dargestellt). Die Propagation des Lichts von der Bildebene x' zum Linsenarray beziehungsweise vom Mikrolinsenarray zum Detektor 20 bewirkt eine Scherung der Phasenraum-Volumina. Deshalb sind die den Mikrolinsen zugeordneten Phasenraumvolumina in der Bildebene x' beziehungsweise in der Detektorebene 20 trapezförmig. Die trapezförmigen Flächen sind somit die Phasenraum-Volumina, die jeweils einer Mikrolinse bzw. einem Kanal zugeordnet sind. Die Steigung des Lichtfelds, das dem Objekt 250 entspricht, in dieser Darstellung entspricht dem Versatz der Objektebene 16 gegenüber der Fokusebene 15, vgl. Gl. 2.

Das von einer Mikrolinse aufgenommene Spektrum hängt von der Position des Objektes 250 ab. Aufgrund der trapezförmigen Ausgestaltung der Phasen-Volumina, die mit einer Mikrolinse assoziiert sind, gibt es einen Überlapp in den projizierten Phasenraum-Volumina zwischen benachbarten Kanälen. Insbesondere werden Strahlen, die außerhalb des Phasenraum-Volumens, das mit einer Mikrolinse assoziiert ist, liegen, von benachbarten Mikrolinsen gesammelt.

Nachdem die Fourier-Transformation in jedem Kanal gebildet wird, wird das Licht in x-Richtung projiziert, was einer Integration über das Lichtfeld, das durch diese Mikrolinse gesammelt wird, entspricht. Anschließend wird das Lichtfeld durch die Bildpunkte 21 des Detektors 20 gesammelt. Eine Rücktransformation in die Bildebene ist durch Nachbearbeitung möglich. Dabei kann berücksichtigt werden, dass jeder Bildpunkt 21 des Detektors 20 einen spezifischen Abschnitt des Lichtfelds im Phasenraumdiagramm sammelt.

Zusammenfassend bewirkt das Mikrolinsenarray 11 also, dass unterschiedliche Winkel 162, mit denen das Licht einfällt, auf unterschiedliche Pupillenkoordinaten in den Kanälen abgebildet werden, sowie dass unterschiedlich defokussierte Bildebenen 16 jeweils auf unterschiedliche Kanal-spezifische Pupillenkoordinaten abgebildet werden.

Die verschiedenen Einschränkungen und Nachteile, die eine Lichtfeld-Bildgebung auf Grundlage des Mikrolinsenarrays 11 bewirkt, können durch optische Vorrichtungen 101 gemäß verschiedener Ausführungsformen behoben und reduziert werden.

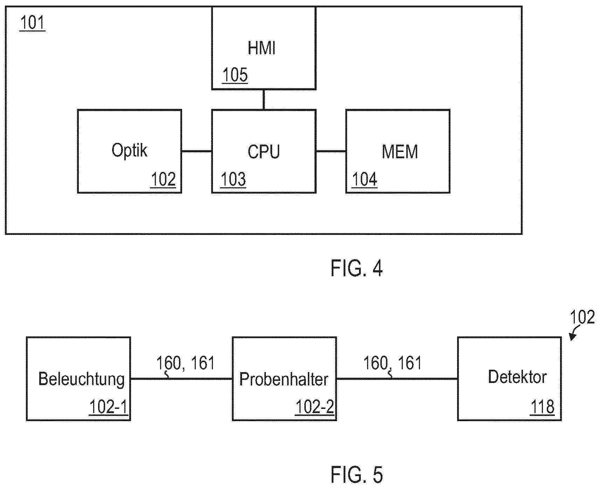

FIG. 4 illustriert eine optische Vorrichtung 101 gemäß verschiedener Ausführungsformen. Die optische Vorrichtung 101 umfasst eine Optik 102. Die Optik 102 kann zum Beispiel Elemente umfassen, die aus folgender Gruppe ausgewählt sind: eine Lichtquelle; eine Abbildungsoptik; einen Detektor; einen Probenhalter; eine bewegliche Bühne; und eine Scanoptik. Die Optik 102 ist mit einem Prozessor bzw. einer Recheneinheit 103 gekoppelt.

Die Recheneinheit 103 kann eingerichtet sein, um die Optik 102 zu steuern. Beispielsweise könnte eine Scanoptik der Optik 102 durch die Recheneinheit 103 gesteuert werden; derart könnte zum Beispiel ein Winkel eines Scanspiegels der Scanoptik eingestellt werden. Z.B. könnte eine Bühne der Scanoptik durch die Recheneinheit 103 zwischen verschiedenen Positionen verstellt werden, um derart z.B. unterschiedliche Betriebsmodi zu implementieren.

Die Recheneinheit 103 kann auch eingerichtet sein, um aus den Messdaten, die für die verschiedenen Scanpositionen erfasst werden, eine räumliche Abbildung des Objekts mittels Techniken der Lichtfeld-Bildgebung zu rekonstruieren.

Die optische Vorrichtung 101 umfasst weiterhin einen Speicher 104, zum Beispiel einen nicht flüchtigen Speicher. Der Speicher 104 kann zum Beispiel Betriebsanweisungen abspeichern, die von der Recheneinheit 103 ausgeführt werden können. Ausführen der Betriebsanweisungen durch die Recheneinheit 103 kann bewirken, dass die Recheneinheit 103 Techniken in Bezug auf das Erzeugen einer räumlich aufgelösten Abbildung des Objekts 250 mittels der Lichtfeld-Bildgebung ausführt und / oder die Optik 102 steuert.

Die optische Vorrichtung 101 umfasst weiterhin eine Benutzerschnittstelle 105. Die Benutzerschnittstelle 105 ist eingerichtet, um Befehle zu einem Benutzer auszugeben und Befehle von einem Benutzer zu empfangen. Zum Beispiel wäre es möglich, dass die Benutzerschnittstelle 105 einen Bildschirm umfasst, auf dem die erzeugte, räumlich aufgelöste Abbildung des Objekts wiedergegeben wird.

In Bezug auf FIG. 5 sind Aspekte betreffend die Optik 102 näher illustriert. In FIG. 5 ist dargestellt, dass eine Lichtquelle 102-1 Licht entlang eines optischen Pfads 160, 161 bzw. der optischen Achse aussendet. Ein Probenhalter 102-2 ist im optischen Pfad 160, 161 hinter der Lichtquelle 102-1 und vor einem Detektor 118 angeordnet. Der Probenhalter 102-2 ist eingerichtet, um ein Objekt 250 in dem optischen Pfad 160, 161 zu fixieren.

Gemäß verschiedener Beispiele können unterschiedlichste Typen und Arten von Detektoren 118 verwendet werden. In einem Beispiel ist der Detektor 118 durch einen Photomultiplier implementiert. Der Photomultiplier kann eine besonders hohe Sensitivität gegenüber einfallen dem Licht aufweisen. Gleichzeitig kann der Detektor 118 eine vergleichsweise geringe Anzahl von Bildpunkten aufweisen, zum Beispiel insbesondere im Vergleich zu Detektoren 20, die gemäß Referenzimplementierungen eingesetzt werden, die ein Mikrolinsenarray 11 umfassen. Beispielsweise könnte der Photomultiplier eine Vielzahl von Bildpunkten umfassen, z.B. weniger als 20 Bildpunkte, bevorzugt weniger als 50 Bildpunkte, besonders bevorzugt weniger als 250 Bildpunkte. Beispielsweise könnte der Photomultiplier ein Bildpunktarray umfassen, welches mindestens 20 oder mehr als 50 oder mehr als 250 Bildpunkte umfasst. Die einzelnen Bildpunkte des Photomultipliers können, zum Beispiel im Vergleich mit den Bildpunkten 21 eines Detektors 20 gemäß Referenzimplementierungen, die ein Mikrolinsenarray umfassen, eine vergleichsweise große sensitive Fläche aufweisen.

Ein Beispiel für eine Architektur des Detektors 118 umfasst Lichtwellenleiter, die dem Photomultiplier vorgeschaltet sind. Diese Lichtwellenleiter können im Vergleich zu den in der Lichtfeldmessung aus dem Stand der Technik verwendeten Kamerapixeln einen sehr großen Durchmesser aufweisen.

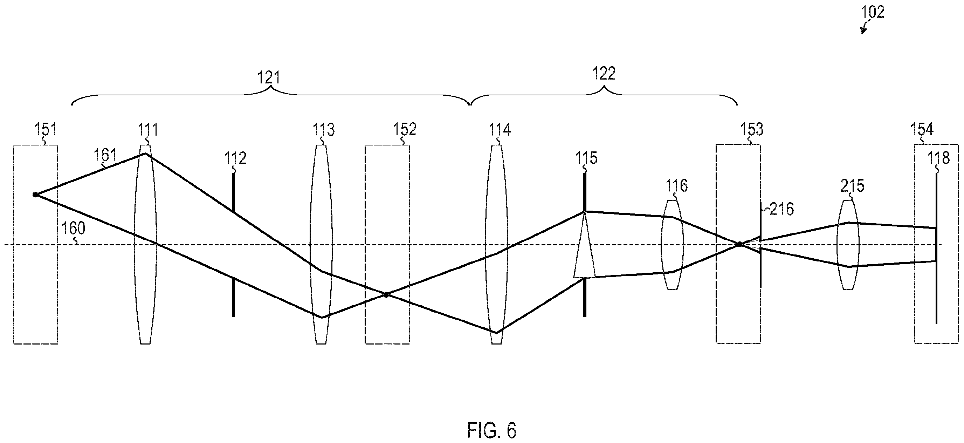

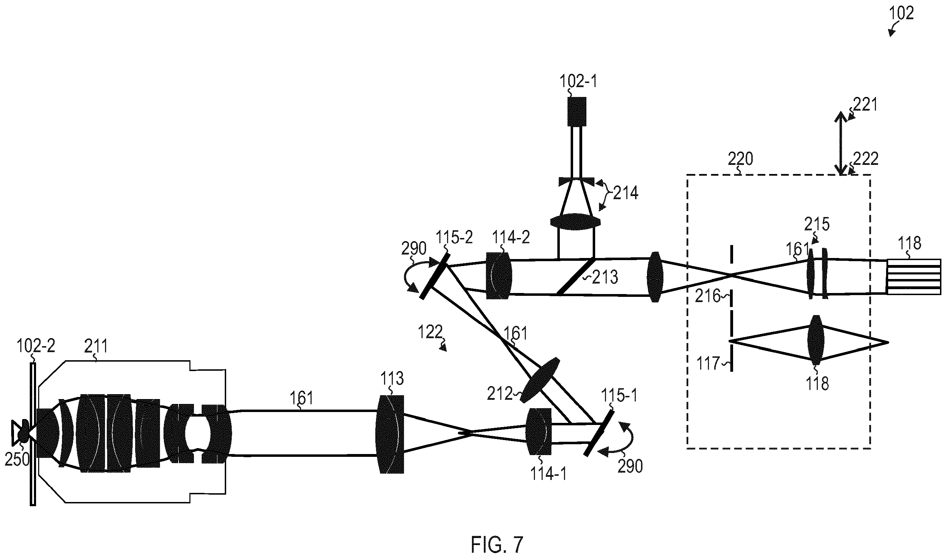

FIG. 6 und FIG. 7 illustrieren Details der Optik 102. Zunächst Bezug nehmend auf FIG. 6: Die Optik 102 ist ausgestaltet, um die vergleichsweise großen Bildpunkte des Detektors 118 zu ermöglichen. Dazu umfasst die Optik 102 eine Scanoptik 122. Beispielsweise aus einem Vergleich der FIGs. 2 und 6 ist ersichtlich, dass die Scanoptik 122 das Mikrolinsenarray 11 ersetzt. Die Scanoptik 122 umfasst in dem Beispiel der FIG. 6 zwei Linsen 114,116, sowie einen Scanspiegel 115, der schematisch in Transmission mit einem bestimmten Ablenkwinkel dargestellt ist. Bevorzugt befindet sich der Scanspiegel 115 in einer Pupillenebene des Gesamtsystems.

Die Optik 102 umfasst auch eine Abbildungsoptik 121. Die Abbildungsoptik 121 bildet das Objekt 250, welches in einer Objektebene 151 angeordnet ist, in eine Bildebene 152 ab. Dazu umfasst die Abbildungsoptik 121 zwei Linsen 111,113 und eine Blende 112. In verschiedenen Beispielen könnte die Abbildungsoptik 121 eingerichtet sein, in der Bildebene 152 ein vergrößertes Abbild des Objekts 250 zu erzeugen. In einem solchen Fall ist es möglich, dass die optische Vorrichtung als Mikroskopievorrichtung betrieben wird.

Die Scanoptik 122 ist dann eingerichtet, um für eine Vielzahl von Scanpositionen jeweils selektiv Licht, welches aus unterschiedlichen Winkelbereichen 162 vom Objekt 250 einfällt, auf den Detektor 118 zu lenken. Dafür bilden die Linsen 114,116 die detektorseitige Bildebene 152 der Abbildungsoptik 121 auf die detektorseitige Bildebene 153 der Scanoptik 122 ab. Die Bildebene 153 entspricht einer Ausgangspupille der Scanoptik 122 beziehungsweise einem Ausschnitt des Abbildes der Objektebene 151. Der Scanspiegel 115 ist verstellbar und kann zum Beispiel von der Recheneinheit 103 für die verschiedenen Winkelpositionen verkippt werden. Zum Filtern von nicht mit einer bestimmten Scanposition assoziierten Feldbereichen kann eine Feldblende 216 vorgesehen, die in der Bildebene 153 der Scanoptik 122 angeordnet ist. Durch geeignete Wahl der Öffnung der Feldblende 216 kann eine Ausdehnung des Feldbereichs, der für jede der Scanpositionen den Detektor 118 erreichen kann, festgelegt werden. Wie in FIG. 6 illustriert, werden Objektpunkte, welche sich nicht in der idealen Objektebene befinden, axial beabstandet zur Feldblende 216 abgebildet. Ab einem bestimmten Abstand werden somit auch bestimmte Winkelbereiche der dem Objektpunkt zugeordneten Strahlung durch die Feldblende abgeschattet.

Die Optik 102 der optischen Vorrichtung 101 umfasst auch eine Kollimatoroptik 215. Die Kollimatoroptik 215 bewirkt, dass das durch die Feldblende 216 hindurchgetretene Licht auf den Detektor 118, der in einer Detektorebene 154 angeordnet ist, gelenkt wird, so dass auf den einzelnen Bildpunkten des Detektors Licht zu verschiedenen Winkelbereichen gesammelt wird. Dies bedeutet, dass die Kollimatoroptik 215 eingerichtet ist, um jeweils einen Winkelbereich des Lichtes, welches die Feldblende 216 passiert, auf einen Bildpunkt 21 des Detektors 118 zu bündeln. Dabei kann die Kollimatoroptik 215 eingerichtet sein, um im Wesentlichen die gesamte sensitive Fläche des Detektors 118 auszuleuchten. Dazu entspricht ein Abstand zwischen der Kollimatoroptik 215 und dem Detektor 118 einer Brennweite der Kollimatoroptik beziehungsweise der Detektor 118 ist in der hinteren Brennebene der Kollimatoroptik 215 angeordnet.

In verschiedenen Implementierungen kann es möglich sein, dass die Abbildungsoptik 121 als Zoom-Optik ausgebildet ist. Dies kann also bedeuten, dass eine Brennweite der Abbildungsoptik 121 variabel ausgebildet ist. In einem solchen Fall kann es erstrebenswert sein, dass auch die Kollimatoroptik 215 als Zoom-Optik ausgebildet ist und eine variable Brennweite aufweist. Dann kann nämlich sichergestellt werden, dass für die verschiedenen Zoom-Einstellungen der Abbildungsoptik 121 jeweils eine geeignete Ausleuchtung der sensitiven Fläche des Detektors 118 erfolgt.

Zum Beispiel durch Verändern der Z-Position des Objektes relativ zur Abbildungsoptik 121 beziehungsweise Veränderung der Fokusebene der Abbildungsoptik 121 kann es möglich sein, das Lichtfeld in frei wählbaren Bereichen oder Kurven durch das Objekt 250 zu erfassen. Z.B. könnte das Lichtfeld an einem oder mehreren getrennten oder verbundenen Punkten innerhalb des Objekts 250 erfasst werden. Das Lichtfeld könnte selektiv für bestimmte Objektebenen erfasst werden oder für bestimmte lateral zur optischen Achse 160 versetzen Bereiche. Durch eine Kombination von Verstellung der Fokusebene und der Scanpositionen können auch verkippte Trajektorien durch das Objekt 250 implementiert werden. Dadurch kann eine Erfassung der Messdaten auf bestimmte einstellbare Messbereiche (engl. region of interest) beschränkt werden. Dadurch kann die Messdauer verringert werden.

Durch die Implementierung der FIG. 6 kann ein Szenario erzeugt werden, welches vergleichbar oder ähnlich ist, mit dem Szenario der FIGs. 1 - 3; deshalb können bekannte Rekonstruktionstechniken zum Erzeugen der räumlichen Abbildung im Kontext der Lichtfeld-Bildgebung eingesetzt werden. Dies bedeutet, dass die Rekonstruktion der räumlichen Abbildung auf herkömmliche Techniken zurückgreifen kann. Die Kollimatoroptik 215 implementiert dabei eine einzelne Mikrolinse des Mikrolinsenarrays 11, wobei aber aufgrund der großen Ausdehnung Licht aus der gesamten Feldblende 216 gesammelt werden kann und aufgrund der größer auslegbaren Kollimatoroptik 215 (das bedeutet mit größerer Brennweite) insbesondere größere und effizientere Detektoren 118 eingesetzt werden können. Eine Aufteilung der Phasenfront gem. FIG. 3 findet nicht statt. Eine Trennung unterschiedlicher Winkelbereich, mit denen Licht vom Objekt einfällt, wird im Szenario der FIG. 6 durch die verschiedenen Scanpositionen implementiert; dies bedeutet, dass im Unterschied zu Referenzimplementierungen, die auf einem Mikrolinsenarray 11 basieren, eine Abtastung des Objekts für verschieden Bildkoordinaten $x,y$ durch die Vielzahl von Scanpositionen erfolgt, vgl. Gl. 1. Um eine Rekonstruktion mittels der Gl. 2, 3 zu ermöglichen, ist es vorteilhaft, wenn die Kollimatoroptik 215 aplanatisch ausgebildet ist. Dies ist insbesondere von Vorteil, da gewöhnliche Mikrolinsen im Stand der Technik keine aplanatische Abbildung des Lichtfeldes gewährleisten.

In manchen Implementierungen kann es erstrebenswert sein, dass die Öffnung der Feldblende 126 und die Scanpositionen derart aufeinander abgestimmt sind, dass mindestens zwei Scanpositionen überlappende Feldbereiche aufweisen. Dazu kann die Öffnung der Feldblende z.B. auf die Winkelbereiche 162 der verschiedenen Scanpositionen abgestimmt sein. Derart kann eine besonders genaue Erzeugung der räumlichen Abbildung des Objekts 250 erfolgen. Insbesondere kann es möglich sein, durch Vergleich der Messdaten, die den Scanpositionen mit überlappenden Feldbereichen entsprechen, einen Versatz bzw. Ungenauigkeiten in der Zuordnung der Messdaten zu reduzieren.

In anderen Beispielen kann es auch möglich sein, dass die Öffnung der Feldblende 126 und die Scanpositionen derart aufeinander abgestimmt sind, dass die Scanpositionen keine überlappenden Feldbereiche aufweisen. In einem solchen Szenario kann die Messdauer besonders kurz ausfallen und es kann möglich sein, die räumliche Abbildung des Objekts 250 vergleichsweise schnell zu erzeugen.

Darüber hinaus ist es möglich, dass für unterschiedliche Betriebsmodus der Erfassung der Messdaten eine unterschiedliche Ausdehnung der individuellen Winkelbereiche 162 gewählt wird. Dabei können typischerweise größere (kleinere) Winkelbereiche 162 einer kleineren (größeren) Ortsauflösung der erzeugten räumlichen Abbildung des Objekts 250 entsprechen. Insbesondere kann eine Ausdehnung der verschiedenen Winkelbereiche 162 einer Bildpunktgröße der räumlichen Abbildung des Objekts 250 entsprechen. Die Winkelbereiche können beispielsweise über eine variable Brennweite der Kollimatoroptik 215 verändert werden.

Darüber hinaus wäre es möglich, dass die Öffnung der Feldblende 216 in mindestens einer Richtung einen veränderbaren Durchmesser aufweist. Derart könnte - je nach Betriebsmodus - eine unterschiedliche Ausdehnung der verschiedenen Feldbereiche implementiert werden. Beispielsweise könnte die Feldblende 216 einen Durchmesser aufweisen, dem Bereich von 2-20 Airy-Einheiten, vorzugsweise im Bereich von 3-8 Airy-Einheiten besonders bevorzugt im Bereich zwischen 4 und 5 Airy-Einheiten liegt.

FIG. 7 zeigt eine Integration der Optik 102, wie sie voranstehend in Bezug auf die FIG. 6 diskutiert wurde, in eine optische Vorrichtung, die als Laser-Scanning-Mikroskop ausgebildet ist. In diesem Fall umfasst die Optik 102 eine Lichtquelle 102-1, die kohärentes monochromatisches Licht aussendet. Ein Strahlaufweiter 214 und ein Strahlteiler 213 lenken den Strahlengang 161. In dem Beispiel der FIG. 7 umfasst die Scanoptik Linsen 113, 114-1, 114-2, 212, sowie zwei bewegliche Spiegel 115-1,115-2, die für die verschiedenen Scanpositionen 290 verkippt werden können. Die Linsen 113,114-1 bilden eine sogenannte Tubuslinse und ein Scanokular. Eine solche Scanoptik kann in den verschiedenen Beispielen, die hierin beschrieben sind, verwendet werden.

Ein Objektiv 211 implementiert die Abbildungsoptik und ist in der Nähe des Objekts 250 angeordnet. Das Objektiv 211 umfasst einen Satz von Linsen. Die Probe 250 ist in der Fokusebene des Objektivs 211 angeordnet und wird durch den Probenhalter 102-2 fixiert. Das Objektiv 211 stellt eine vergrößerte Abbildung des Objekts 250 bereit.

Vom Objekt 250 wird Licht in Richtung des Detektors 118 ausgesendet. Dieses durchläuft wiederum die Scanoptik 113, 114,115-1,115-2, tritt durch den Strahlteiler 213 hindurch und wird durch eine Linse 116 in eine Bildebene abgebildet, in welcher sich die Feldblende 216 befindet. Ein solcher Betrieb der Optik 102 kann einem Lichtfeld-Betriebsmodus entsprechen.

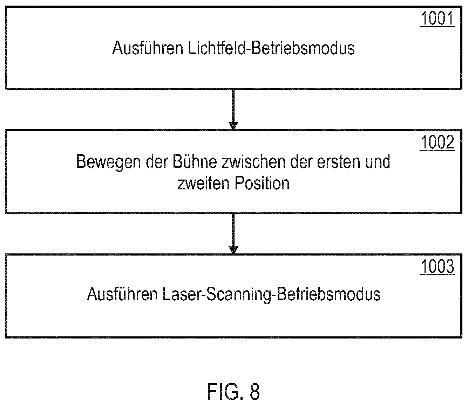

Die Optik 102 kann neben dem Lichtfeld-Betriebsmodus 1001 auch in einem Laser-Scanning-Betriebsmodus 1003 betrieben werden, cf. FIG. 8. Wieder Bezug nehmend auf FIG. 7, In dem Laser-Scanning-Betriebsmodus 1003 der Optik 102 kann es erstrebenswert sein, dass anstatt der Feldblende 216, die eine vergleichsweise große Öffnung aufweist, eine Lochblende 117 (manchmal auch als konfokales Pinhole bezeichnet) mit einer vergleichsweise kleinen Öffnung eingesetzt wird. Dies kann es erlauben, im Laser-Scanning-Betriebsmodus 1003 eine besonders scharfe Trennung zwischen Punkten, die in unterschiedlichen Objektebenen des Objekts 250 angeordnet sind, zu erreichen.

Um einen solchen Wechsel zwischen verschiedenen Betriebsmodi zu ermöglichen, umfasst die Optik 102 eine bewegliche Bühne 220, die zwischen einer ersten Position 221 und einer zweiten Position 222 bewegbar ist, 1002 (cf. FIGs. 7 und 8). Z.B. kann die Recheneinheit 103 die bewegliche Bühne ansteuern, um diese zwischen der ersten und zweiten Position 221, 222 zu verschieben. Die Kollimatoroptik 215 und die Feldblende 216 sind mit der beweglichen Bühne 220 derart gekoppelt, dass die Kollimatoroptik 215 und die Feldblende 216 in der ersten Position 221 der beweglichen Bühne 220 im optischen Pfad 161 positioniert sind. Die Lochblende 117 und eine Sammellinse 118 sind auch mit der beweglichen Bühne 220 gekoppelt, jedoch derart, dass sie sich in der zweiten Position 222 im optischen Pfad 161 befinden. Derart ist es möglich, durch Verstellen zwischen der ersten und zweiten Position 221,222 zwischen dem Laser-Scanning-Betriebsmodus 1003 und dem Lichtfeld-Betriebsmodus 1001 hin und her zu schalten. In verschiedenen Implementierungen kann der Laser-Scanning-Betriebsmodus auch eine Superauflösung, z.B. mittels Airy-Scan Techniken bereitstellen.

Die Implementierung gemäß FIG. 7 erlaubt einen sehr großen Abbildungsmaßstab. Der Abbildungsmaßstab zwischen der Objektebene mit dem Objekt 250 und dem Detektor 118 kann im Laser-Scanning-Betriebsmodus mehr als 1000, insbesondere 1500 betragen. Somit kann ein Punktbild stark vergrößert in die Zwischenbildebene mit der Feldblende 216 oder auf dem Detektor 118 gebildet werden, so dass Punktbildradien von mehr als 100 $\mu$m, bevorzugt mehr als 250 $\mu$m möglich werden. Dadurch werden effiziente Detektoren wie beispielsweise Photomultiplier möglich. Mittels den einzelnen Photomultipliern vorgeschalteten flexiblen Lichtleitern (in FIG. 7 ist nur schematisch das dicht gepackte Ende der Lichtleiter 118 dargestellt) kann eine dichte Packung von Bildpunkten erreicht werden. Durch Anordnung der Kollimatoroptik 215 können somit auch große, lichteffiziente Detektoren für die Lichtfeldmessung eingesetzt werden.

Eine weitere Möglichkeit zwischen dem Laser-Scanning-Betriebsmodus 1003 und dem Lichtfeld-Betriebsmodus 1001 hin und her zu schalten könnte durch eine Feldblende 216 mit einer Öffnung mit veränderbarem Durchmesser und / oder einer als Zoom-Optik ausgebildeten Kollimatoroptik 215 implementiert werden. Die Zoom-Optik kann insbesondere als Optik mit variabler Brennweite ausgelegt sein, wobei die axialen Abstände von Objektfeld - der Feldblende 216 - und Bildfeld - der Detektorebene 118 - unverändert bleiben. Solche Zooms sind beispielsweise als mindestens zweistufige Zooms ausgeführt, wobei mit einer Zoomstufe die Brennweite variiert wird und mit einer weiteren Zoomstufe der Abstand zwischen Objektebene und Pupillenebene konstant gehalten wird. Die Zoomoptik kann beispielsweise konventionell durch axial verschiebbare Linsengruppen oder mit lateral beweglichen asphärische Elemente ausgelegt sein.

Der Lichtfeld-Betriebsmodus 1001 und der Laser-Scanning-Betriebsmodus 1003 können in synergetisch kombiniert eingesetzt werden. Beispielsweise kann in dem Laser-Scanning-Betriebsmodus 1003 auch eine räumliche Abbildung des Objekts 250 erzeugt werden. Dies kann z.B. durch Verschieben der Lochblende 117 entlang der z-Richtung oder durch Veränderung der Fokusebene des Objektivs 211 oder durch Veränderung der relativen axialen Position des Objekts 250 durch eine Relativbewegung zwischen Objektiv 211 und Objekt 250 geschehen. Typischerweise kann eine Messdauer zum Erreichen der räumlichen Abbildung des Objekts mittels des Laser-Scanning-Betriebsmodus 1003 vergleichsweise lange sein, insbesondere länger als die Messdauer für die Lichtfeld-Betriebsmodus 1001. Dafür kann aber eine Tiefenauflösung vergleichsweise groß sein. Deshalb kann es erstrebenswert sein, eine Grobauswahl eines bestimmten z-Bereichs anhand der mit dem Lichtfeld-Betriebsmodus 1001 erzeugten räumlichen Abbildung zu ermöglichen und das Erzeugen der räumlichen Abbildung mittels des Laser-Scanning-Betriebsmodus 1003 auf diesen bestimmten z-Bereich zu beschränken. Z.B. könnte der Benutzer über die Benutzerschnittstelle 105 ein 3D Übersichtsbild auf Grundlage des Lichtfeld-Betriebsmodus 1001 erhalten und dort einen bestimmten Messbereich selektieren. Dazu kann der Benutzer z.B. digital in drei Dimensionen durch das Objekt 250 fahren und zoomen und bestimmte Bereiche fokussieren. Dann kann mittels des Laser-Scanning-Betriebsmodus 1003 für diesen Messbereich eine räumliche Abbildung mit besonders großer Auflösung erzeugt werden. Für lichtempfindliche Proben hat dies den Vorteil, dass die Exposition gegenüber Licht reduziert werden kann.

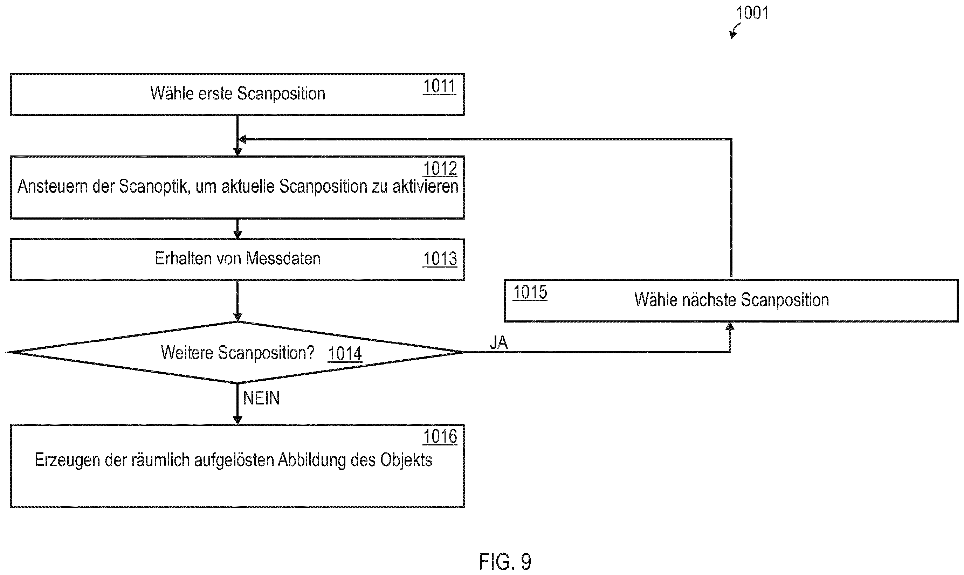

FIG. 9 illustriert Details zu einem Verfahren gemäß verschiedener Ausführungsformen. Insbesondere illustriert FIG. 9 Details zu dem Lichtfeld-Betriebsmodus 1001. Zunächst wird eine erste Scanposition 290 ausgewählt, 1011. Diese erste Scanposition 290 wird als aktuelle Scanposition 290 übernommen und anschließend wird die Scanoptik 122 angesteuert, um die aktuelle Scanposition 290 zu aktivieren, 1012. Dies kann umfassen, dass ein oder mehrere Scanspiegel 115,115-1,115-2 verkippt werden, sodass Licht aus einem bestimmten Winkelbereich auf den Detektor 118 gelenkt wird.

Dann werden für die aktive Scanposition 290 die Bildpunkte des Detektors 118 ausgelesen, um entsprechende Messdaten zu erhalten, 1013.

Anschließend wird überprüft, ob Messdaten für eine weitere Scanposition 290 benötigt werden, 1014. Ist dies der Fall, so wird eine nächste Scanposition ausgewählt, 1015; diese wird als aktuelle Scanposition 290 übernommen. Anschließend werden die Schritte 1012-1014 mit der neuen, aktuellen Scanposition 290 erneut durchgeführt.

Z.B. können die Scanpositionen 290 flexibel bestimmt werden. Die Scanpositionen 290 können z.B. basierend auf einer gewünschten Ortsauflösung der räumlichen Abbildung des Objekts 250 bestimmt werden. Eine größere (geringere) Ortsauflösung kann typischerweise einer größeren (geringeren) Anzahl von Scanpositionen 290 entsprechen.

Wenn in 1014 festgestellt wird, dass Messdaten für weitere Scanpositionen 290 nicht benötigt werden, wird in 1016 die räumlich aufgelöste Abbildung des Objekts 250 erzeugt. Dazu können Rekonstruktionstechniken eingesetzt werden, wie sie zum Beispiel im Zusammenhang mit den FIGs. 1-3 voranstehend beschrieben wurden. Es sind jedoch auch andere Rekonstruktionstechniken denkbar. Insbesondere umfasst die räumlich aufgelöste Abbildung des Objekts 250 mehrere Bilder, welchen unterschiedlichen Objektebenen des Objekts 250 entsprechen. Dabei können die verschiedenen Objektebenen einen besonders großen Abstand zueinander aufweisen, welche insbesondere größer ist, als eine Tiefenschärfe, die zum Beispiel durch die Abbildungsoptik 121, 211 definiert wird.

Optional könnte vor Schritt 1011 die Feldblende 216 angesteuert werden, um einen Durchmesser der Öffnung der Feldblende 216 einzustellen (in FIG. 9 nicht dargestellt). Der Durchmesser der Öffnung kann z.B. in Abhängigkeit der gewünschten Tiefenauflösung der räumlichen Abbildung bestimmt werden.

Zusammenfassend wurden obenstehend Techniken beschrieben, welche es ermöglichen, Lichtfeld-Bildgebung ohne den Einsatz eines Mikrolinsenarrays durchzuführen. Die hierin beschriebenen Techniken beruhen auf der Verwendung einer Scanoptik, welche es ermöglicht, für verschiedene Scanpositionen jeweils Licht aus unterschiedlichen Winkelbereichen auf den Detektor zu lenken. Dadurch wird die parallele Abtastung der verschiedenen Winkelbereiche, die durch das Mikrolinsenarray erreicht wird, durch eine serielle Abtastung ersetzt. Dies ermöglicht es, eine besonders hohe Ortsauflösung der Bilder aus den verschiedenen Objektebenen für die räumliche Abbildung bereitzustellen. Ferner kann es mittels solcher Techniken möglich sein, beispielsweise große Detektoren mit einer geringeren Anzahl von Bildpunkten einzusetzen; dies kann den Einsatz von Photomultipliern ermöglichen, die eine besonders hohe Sensitivität aufweisen. Außerdem kann es mittels der hierin beschriebenen Techniken möglich sein, die Optik zur Lichtfeld-Bildgebung in ein Laser-Scanning-Mikroskop zu integrieren.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

**Patentansprüche**

1. Optische Vorrichtung (101) zur Lichtfeld-Bildgebung, wobei die optische Vorrichtung umfasst:

    - eine Lichtquelle (102-1), die eingerichtet ist, um Licht entlang eines optischen Pfads (160, 161) auszusenden,
    - einen Detektor (118) mit mehreren Bildpunkten,
    - einen Probenhalter (102-2), der im optischen Pfad (160, 161) hinter der Lichtquelle (102-1) und vor dem Detektor (118) angeordnet ist und der eingerichtet ist, um ein Objekt (250) in dem optischen Pfad (160, 161) von Licht zu fixieren,
    - eine Scanoptik (114, 114-1, 114-2, 115, 115-1, 115-2, 116, 122), die im optischen Pfad (160, 161) hinter dem Probenhalter (102-2) und vor dem Detektor (118) angeordnet ist und die eingerichtet ist, um für eine Vielzahl von Scanpositionen (290) jeweils selektiv Licht, welches aus unterschiedlichen Winkelbereichen (162) vom Objekt (250) einfällt, auf den Detektor (118) zu lenken,
    - eine Kollimatoroptik (215), die im optischen Pfad hinter der Scanoptik und vor dem Detektor (118) angeordnet ist und die eingerichtet ist, um für die verschiedenen Scanpositionen (290) jeweils Licht aus den unterschiedlichen Winkelbereichen auf unterschiedliche Bildpunkte des Detektors abzubilden, wobei die Kollimatoroptik (215) eingerichtet ist, eine Ausgangs-Pupillenebene der Scanoptik (114, 114-1, 114-2, 115, 115-1, 115-2, 116, 122) auf eine Detektorfläche des Detektors (118) abzubilden, wobei ein Abstand zwischen der Kollimatoroptik (215) und dem Detektor (118) einer Brennweite der Kollimatoroptik (215) entspricht,
    wobei der Detektor (118) eingerichtet ist, um für jede der Vielzahl von Scanpositionen (290) Messdaten zu erfassen,
    - eine Recheneinheit (103), die mit dem Detektor (118) gekoppelt ist, und die eingerichtet ist, um basierend auf einem dreidimensionalen Lichtfeld, welches durch die Messdaten der Vielzahl von Scanpositionen (290) repräsentiert wird, eine räumlich aufgelöste Abbildung des Objekts (250) zu erzeugen, die mindestens zwei Bilder aus unterschiedlichen Objektebenen des Objekts umfasst.

2. Optische Vorrichtung (101) nach Anspruch 1, die weiterhin umfasst:

- eine Abbildungsoptik (121, 211), die im optischen Pfad (160, 161) angeordnet ist und die eine Abbildung des Objekts (250) mit einer Tiefenschärfe bewirkt,

wobei die Objektebenen der mindestens zwei Bilder einen Abstand zueinander aufweisen, der größer als die Tiefenschärfe ist.

3. Optische Vorrichtung (101) nach Anspruch 1 oder 2,

wobei der Detektor (118) einen Photomultiplier umfasst,
wobei der Photomultiplier eine Vielzahl von Bildpunkten umfasst, beispielsweise weniger als 250 Bildpunkte, bevorzugt weniger als 50 Bildpunkte, besonders bevorzugt weniger als 20 Bildpunkte umfasst,
wobei der Detektor (118) optional für jeden Bildpunkt des Photomultipliers einen Lichtwellenleiter mit einem dem Probenhalter (102-2) zugewendeten ersten Ende und einem dem jeweiligen Bildpunkt zugewendeten zweiten Ende umfasst.

4. Optische Vorrichtung (101) nach einem der voranstehenden Ansprüche,
wobei die Kollimatoroptik (215) aplanatisch ausgebildet ist.

5. Optische Vorrichtung (101) nach Anspruch 4,
wobei der Detektor (118) in der vom dem Objekt (250) abgewendeten Brennebene der Kollimatoroptik (215) angeordnet ist.

6. Optische Vorrichtung (101) nach Anspruch 4 oder 5,

wobei die optische Vorrichtung (101) eine bewegliche Bühne (220) umfasst, die zwischen einer ersten Position (221) und einer zweiten Position (222) bewegbar ist,
wobei die Kollimatoroptik (215) mit der beweglichen Bühne (220) gekoppelt ist,
wobei die Kollimatoroptik (215) in der ersten Position (221) der beweglichen Bühne (220) im optischen Pfad (160, 161) positioniert ist,
wobei die Kollimatoroptik (215) in der zweiten Position (222) der beweglichen Bühne (220) nicht im optischen Pfad (160, 161) positioniert ist.

7. Optische Vorrichtung (101) nach einem der Ansprüche 4 - 6,

wobei die Kollimatoroptik (215) als Zoom-Optik ausgebildet ist,
wobei die Zoom-Optik (215) eingerichtet ist, um die Winkelbereiche (161) des Lichts mit variabler Brennweite auf den Detektor (118) abzubilden.

8. Optische Vorrichtung (101) nach einem der voranstehenden Ansprüche,
wobei die optische Vorrichtung (101) eine Feldblende (216) umfasst, die in einer Bildebene (153) der Scanoptik (114, 114-1, 114-2, 115, 115-1, 115-2, 116, 122) angeordnet ist.

9. Optische Vorrichtung (101) nach Anspruch 8,

wobei eine Öffnung der Feldblende (216) und die Vielzahl der Scanpositionen (290) derart eingerichtet sind, dass mindestens zwei Scanpositionen überlappende Feldbereiche aufweisen, oder
wobei eine Öffnung der Feldblende (216) und die Vielzahl der Scanpositionen (290) derart eingerichtet sind, dass die Vielzahl der Scanpositionen keine überlappenden Feldbereiche aufweisen.

10. Optische Vorrichtung (101) nach Anspruch 8 oder 9,
wobei eine Öffnung der Feldblende (216) in mindestens einer Richtung einen veränderbaren Durchmesser aufweist.

11. Optische Vorrichtung (101) nach Anspruch 6 und nach einem der Ansprüche 8 - 10,

wobei die Feldblende (216) mit der beweglichen Bühne (220) gekoppelt ist,

wobei die Feldblende (216) in der ersten Position (221) der beweglichen Bühne (220) im optischen Pfad (160, 161) positioniert ist,

wobei die Feldblende (216) in der zweiten Position (222) der beweglichen Bühne (220) nicht im optischen Pfad (160, 161) positioniert ist.

12. Verfahren, das umfasst:

- Ansteuern einer Scanoptik (114, 114-1, 114-2, 115, 115-1, 115-2, 116, 122), die in einem optischen Pfad (160, 161) einer optischen Vorrichtung (101) hinter einem Probenhalter (102-2) und vor einem Detektor (118) angeordnet ist, um für eine Vielzahl von Scanpositionen (290) jeweils selektiv Licht, das aus unterschiedlichen Winkelbereichen (162) von einem auf dem Probenhalter (102-2) fixierten Objekt (250) einfällt, auf den Detektor (118) zu lenken, wobei die optische Vorrichtung (101) ferner eine Kollimatoroptik (215) umfasst, die im optischen Pfad hinter der Scanoptik und vor dem Detektor (118) angeordnet ist und die eingerichtet ist, um für die verschiedenen Scanpositionen (290) jeweils Licht aus den unterschiedlichen Winkelbereichen auf unterschiedliche Bildpunkte des Detektors abzubilden, wobei die Kollimatoroptik (215) eingerichtet ist, eine Ausgangs-Pupillenebene der Scanoptik (114, 114-1, 114-2, 115, 115-1, 115-2, 116, 122) auf eine Detektorfläche des Detektors (118) abzubilden, wobei ein Abstand zwischen der Kollimatoroptik (215) und dem Detektor (118) einer Brennweite der Kollimatoroptik (215) entspricht,
- für jede der Vielzahl von Scanpositionen (290): Erhalten von Messdaten von dem Detektor (118),
- basierend auf einem dreidimensionalen Lichtfeld, welches durch die Messdaten der Vielzahl von Scanpositionen (290) repräsentiert wird: Erzeugen einer räumlich aufgelösten Abbildung des Objekts (250), die mindestens zwei Bilder aus unterschiedlichen Objektebenen des Objekts (250) umfasst.

13. Verfahren nach Anspruch 12, das weiterhin umfasst:

- Bestimmen der Vielzahl von Scanpositionen (290) basierend auf einer vorgegebenen Ortsauflösung der räumlich aufgelösten Abbildung des Objekts (250).

14. Verfahren nach Anspruch 12 oder 13, das weiterhin umfasst:

- Ansteuern einer Feldblende (216), die einen in mindestens einer Richtung veränderbaren Durchmesser aufweist, zum Einstellen des Durchmessers,
- Bestimmen des Durchmessers der Feldblende (216) basierend auf einer vorgegebenen Tiefenauflösung der räumlich aufgelösten Abbildung des Objekts (250).

15. Verfahren nach einem der Ansprüche 12 - 14, das weiterhin umfasst:

- Ansteuern einer beweglichen Bühne, die mit der Kollimatoroptik (215) gekoppelt ist, um die Bühne zwischen einer ersten Position und einer zweiten Position zu verschieben,

wobei die Kollimatoroptik (215) in der ersten Position der beweglichen Bühne im optischen Pfad (160, 161) positioniert ist,

wobei die erste Position mit einem Lichtfeld-Betriebsmodus der optischen Vorrichtung (101) assoziiert ist,

wobei die zweite Position mit einem Laser-Scanning-Betriebsmodus der optischen Vorrichtung (101) assoziiert ist.

**Claims**

1. Optical device (101) for light field imaging, wherein the optical device comprises:

- a light source (102-1) configured to emit light along an optical path (160, 161),
- a detector (118) with a plurality of pixels,
- a sample holder (102-2), which is arranged in the optical path (160, 161) downstream of the light source (102-1) and upstream of the detector (118) and which is configured to fix an object (250) in the optical path (160, 161) of light,
- a scanning optical unit (114, 114-1, 114-2, 115, 115-1, 115-2, 116, 122), which is arranged in the optical path (160, 161) downstream of the sample holder (102-2) and upstream of the detector (118) and which is configured, for a multiplicity of scanning positions (290), in each case selectively to direct light incident from different angular ranges (162) from the object (250) onto the detector (118),

- a collimator optical unit (215), which is arranged in the optical path downstream of the scanning optical unit and upstream of the detector (118) and which is configured, for the various scanning positions (290), in each case to image light from the different angular ranges onto different pixels of the detector, wherein the collimator optical unit (215) is configured to image an exit pupil plane of the scanning optical unit (114, 114-1, 114-2, 115, 115-1, 115-2, 116, 122) onto a detector area of the detector (118), wherein a distance between the collimator optical unit (215) and the detector (118) corresponds to a focal length of the collimator optical unit (215),

wherein the detector (118) is configured to detect measurement data for each of the multiplicity of scanning positions (290),

- a computing unit (103), which is coupled to the detector (118) and which is configured, on the basis of a three-dimensional light field represented by the measurement data of the multiplicity of scanning positions (290) to generate a spatially resolved imaging of the object (250) that comprises at least two images from different object planes of the object.

2. Optical device (101) according to Claim 1, which furthermore comprises:

- an imaging optical unit (121, 211), which is arranged in the optical path (160, 161) and which brings about an imaging of the object (250) with a depth of field,

wherein the object planes of the at least two images are at a distance from one another that is greater than the depth of field.

3. Optical device (101) according to Claim 1 or 2, wherein the detector (118) comprises a photomultiplier, wherein the photomultiplier comprises a multiplicity of pixels, for example comprises fewer than 250 pixels, preferably fewer than 50 pixels, particularly preferably fewer than 20 pixels, wherein the detector (118) optionally comprises, for each pixel of the photomultiplier, an optical waveguide having a first end facing the sample holder (102-2) and a second end facing the respective pixel.

4. Optical device (101) according to any one of the preceding claims, wherein the collimator optical unit (215) is of aplanatic design.

5. Optical device (101) according to Claim 4, wherein the detector (118) is arranged in the focal plane of the collimator optical unit (215) facing away from the object (250).

6. Optical device (101) according to Claim 4 or 5,

wherein the optical device (101) comprises a movable stage (220), which is movable between a first position (221) and a second position (222), wherein the collimator optical unit (215) is coupled to the movable stage (220), wherein the collimator optical unit (215) is positioned in the optical path (160, 161) in the first position (221) of the movable stage (220), wherein the collimator optical unit (215) is not positioned in the optical path (160, 161) in the second position (222) of the movable stage (220).

7. Optical device (101) according to any one of Claims 4-6,

wherein the collimator optical unit (215) is designed as a zoom optical unit, wherein the zoom optical unit (215) is configured to image the angular ranges (161) of the light with variable focal length onto the detector (118).

8. Optical device (101) according to any one of the preceding claims, wherein the optical device (101) comprises a field stop (216) arranged in an image plane (153) of the scanning optical unit (114, 114-1, 114-2, 115, 115-1, 115-2, 116, 122).

9. Optical device (101) according to Claim 8,

wherein an aperture of the field stop (216) and the multiplicity of the scanning positions (290) are configured in such a way that at least two scanning positions have overlapping field regions or

wherein an aperture of the field stop (216) and the multiplicity of the scanning positions (290) are configured in such a way that the multiplicity of the scanning positions have no overlapping field regions.

10. Optical device (101) according to Claim 8 or 9, wherein an aperture of the field stop (216) has a variable diameter in at least one direction.

11. Optical device (101) according to Claim 6 and according to any one of Claims 8-10,

wherein the field stop (216) is coupled to the movable stage (220),
wherein the field stop (216) is positioned in the optical path (160, 161) in the first position (221) of the movable stage (220),
wherein the field stop (216) is not positioned in the optical path (160, 161) in the second position (222) of the movable stage (220).

12. Method comprising:

- driving a scanning optical unit (114, 114-1, 114-2, 115, 115-1, 115-2, 116, 122), which is arranged in an optical path (160, 161) of an optical device (101) downstream of a sample holder (102-2) and upstream of a detector (118), in order, for a multiplicity of scanning positions (290), in each case selectively to direct light incident from different angular ranges (162) from an object (250) fixed on the sample holder (102-2) onto the detector (118), wherein the optical device (101) further comprises a collimator optical unit (215), which is arranged in the optical path downstream of the scanning optical unit and upstream of the detector (118) and which is configured, for the various scanning positions (290), in each case to image light from the different angular ranges onto different pixels of the detector, wherein the collimator optical unit (215) is configured to image an exit pupil plane of the scanning optical unit (114, 114-1, 114-2, 115, 115-1, 115-2, 116, 122) onto a detector area of the detector (118), wherein a distance between the collimator optical unit (215) and the detector (118) corresponds to a focal length of the collimator optical unit (215),
- for each of the multiplicity of scanning positions (290): obtaining measurement data by the detector (118),
- on the basis of a three-dimensional light field represented by the measurement data of the multiplicity of scanning positions (290): generating a spatially resolved imaging of the object (250) that comprises at least two images from different object planes of the object (250).

13. Method according to Claim 12, which furthermore comprises:

- determining the multiplicity of scanning positions (290) on the basis of a predefined spatial resolution of the spatially resolved imaging of the object (250).

14. Method according to Claim 12 or 13, which furthermore comprises:

- driving a field stop (216), having a diameter that is variable in at least one direction, for the purpose of setting the diameter,
- determining the diameter of the field stop (216) on the basis of a predefined depth resolution of the spatially resolved imaging of the object (250).

15. Method according to any one of Claims 12-14, which furthermore comprises:

- driving a movable stage, coupled to the collimator optical unit (215), in order to displace the stage between a first position and a second position,
wherein the collimator optical unit (215) is positioned in the optical path (160, 161) in the first position of the movable stage,
wherein the first position is associated with a light field operating mode of the optical device (101),
wherein the second position is associated with a laser scanning operating mode of the optical device (101) .

**Revendications**

1. Dispositif optique (101) d'imagerie à champ lumineux, le dispositif optique comprenant :

   - une source lumineuse (102-1) qui est conçue pour émettre de la lumière le long d'un chemin optique (160, 161),
   - un détecteur (118) pourvu de plusieurs pixels,
   - un porte-échantillon (102-2) qui est disposé sur le chemin optique (160, 161) après la source lumineuse (102-1) et avant le détecteur (118), et qui est conçu pour fixer l'objet (250) sur le chemin optique (160, 161) de la lumière,
   - une optique de balayage (114, 114-1, 114-2, 115, 115-1, 115-2, 116, 122) qui est disposée sur le chemin optique (160, 161) après le porte-échantillon (102-2) et avant le détecteur (118), et qui, pour une pluralité de positions de balayage (290), est conçue pour diriger sur le détecteur (118) respectivement sélectivement la lumière qui est incidente à partir de différentes plages angulaires (162) de l'objet (250),
   - une optique à collimateur (215) qui est disposée sur le chemin optique après l'optique de balayage et avant le détecteur (118), et qui est conçue pour représenter pour les différentes positions de balayage (290) respectivement la lumière provenant des différentes plages angulaires sur différents pixels du détecteur, dans lequel l'optique à collimateur (215) est conçue pour représenter un plan de pupille de sortie de l'optique de balayage (114, 114-1, 114-2, 115, 115-1, 115-2, 116, 122) sur une surface de détection du détecteur (118), dans lequel une distance entre l'optique à collimateur (215) et le détecteur (118) correspond à une distance focale de l'optique à collimateur (215),
   dans lequel le détecteur (118) est conçu pour détecter des données de mesure pour chacune de la pluralité de positions de balayage (290),
   - une unité de calcul (103) qui est couplée au détecteur (118), et qui est conçue pour générer sur la base d'un champ lumineux en trois dimensions qui est représenté par les données de mesure de la pluralité de positions de balayage (290) une représentation à résolution spatiale de l'objet (250) qui comprend au moins deux images de différents plans objet de l'objet.

2. Dispositif optique (101) selon la revendication 1, comprenant en outre :

   - une optique de représentation (121, 211) qui est disposée sur le chemin optique (160, 161), et qui provoque une représentation de l'objet (250) avec une profondeur de champ,

   dans lequel les plans objet des au moins deux images présentent une distance l'un par rapport à l'autre qui est supérieure à la profondeur de champ.

3. Dispositif optique (101) selon la revendication 1 ou 2,

   dans lequel le détecteur (118) comprend un photomultiplicateur,
   dans lequel le photomultiplicateur comprend une pluralité de pixels, par exemple moins de 250 pixels, de préférence moins de 50 pixels, de manière particulièrement préférée moins de 20 pixels,
   dans lequel le détecteur (118) comprend en option pour chaque pixel du photomultiplicateur un guide d'ondes optiques pourvu d'une première extrémité tournée vers le porte-échantillon (102-2) et d'une deuxième extrémité tournée vers le pixel respectif.

4. Dispositif optique (101) selon l'une quelconque des revendications précédentes,
   dans lequel l'optique à collimateur (215) est réalisée de manière aplanétique.

5. Dispositif optique (101) selon la revendication 4,
   dans lequel le détecteur (118) est disposé dans le plan focal, détourné de l'objet (250), de l'optique à collimateur (215).

6. Dispositif optique (101) selon la revendication 4 ou 5,

   dans lequel le dispositif optique (101) comprend une platine mobile (220) qui peut être déplacée entre une première position (221) et une deuxième position (222),
   dans lequel l'optique à collimateur (215) est couplée à la platine mobile (220),
   dans lequel, dans la première position (221) de la platine mobile (220), l'optique à collimateur (215) est positionnée sur le chemin optique (160, 161),
   dans lequel, dans la deuxième position (222) de la platine mobile (220), l'optique à collimateur (215) n'est pas positionnée sur le chemin optique (160, 161).

**7.** Dispositif optique (101) selon l'une quelconque des revendications 4 à 6,

dans lequel l'optique à collimateur (215) est réalisée comme une optique de zoom,
dans lequel l'optique de zoom (215) est conçue pour représenter les plages angulaires (161) de la lumière avec une distance focale variable sur le détecteur (118).

**8.** Dispositif optique (101) selon l'une quelconque des revendications précédentes,
dans lequel le dispositif optique (101) comprend un diaphragme de champ (216) qui est disposé dans un plan d'image (153) de l'optique de balayage (114, 114-1, 114-2, 115, 115-1, 115-2, 116, 122).

**9.** Dispositif optique (101) selon la revendication 8,

dans lequel une ouverture du diaphragme de champ (216) et la pluralité des positions de balayage (290) sont conçues de telle sorte qu'au moins deux positions de balayage présentent des zones de champ qui se chevauchent, ou
dans lequel une ouverture du diaphragme de champ (216) et la pluralité des positions de balayage (290) sont conçues de telle sorte que la pluralité de positions de balayage ne présente pas de zones de champ qui se chevauchent.

**10.** Dispositif optique (101) selon la revendication 8 ou 9,
dans lequel une ouverture du diaphragme de champ (216) présente dans au moins une direction un diamètre variable.

**11.** Dispositif optique (101) selon la revendication 6 et selon l'une quelconque des revendications 8 à 10,

dans lequel le diaphragme de champ (216) est couplé à la platine mobile (220),
dans lequel, dans la première position (221) de la platine mobile (220), le diaphragme de champ (216) est positionné sur le chemin optique (160, 161),
dans lequel, dans la deuxième position (222) de la platine mobile (220), le diaphragme de champ (216) n'est pas positionné sur le chemin optique (160, 161).

**12.** Procédé, comprenant les étapes consistant à :

- piloter une optique de balayage (114, 114-1, 114-2, 115, 115-1, 115-2, 116, 122) qui est disposée sur un chemin optique (160, 161) d'un dispositif optique (101) après un porte-échantillon (102-2) et avant un détecteur (118) afin de diriger sur le détecteur (118) pour une pluralité de positions de balayage (290) respectivement sélectivement la lumière qui est incidente à partir de différentes plages angulaires (162) d'un objet (250) qui est fixé sur le porte-échantillon (102-2), dans lequel le dispositif optique (101) comprend en outre une optique à collimateur (215) qui est disposée sur le chemin optique après l'optique de balayage et avant le détecteur (118) et qui est conçue pour représenter pour les différentes positions de balayage (290) respectivement la lumière provenant des différentes plages angulaires sur différents pixels du détecteur, dans lequel l'optique à collimateur (215) est conçue pour représenter un plan de pupille de sortie de l'optique de balayage (114, 114-1, 114-2, 115, 115-1, 115-2, 116, 122) sur une surface de détection du détecteur (118), dans lequel une distance entre l'optique à collimateur (215) et le détecteur (118) correspond à une distance focale de l'optique à collimateur (215),
- pour chacune de la pluralité de positions de balayage (290) : obtenir des données de mesure du détecteur (118),
- sur la base d'un champ lumineux en trois dimensions qui est représenté par les données de mesure de la pluralité de positions de balayage (290) : générer une représentation à résolution spatiale de l'objet (250) qui comprend les au moins deux images provenant de différents plans d'objet de l'objet (250).

**13.** Procédé selon la revendication 12, comprenant en outre :

- déterminer la pluralité de positions de balayage (290) sur la base d'une résolution spatiale prédéfinie de la représentation à résolution spatiale de l'objet (250).

**14.** Procédé selon la revendication 12 ou 13, comprenant en outre :

- piloter un diaphragme de champ (216) qui présente dans au moins une direction un diamètre variable pour régler le diamètre,

EP 3 179 288 B1

- déterminer le diamètre du diaphragme de champ (216) sur la base d'une résolution en profondeur prédéfinie de la représentation à résolution spatiale de l'objet (250).

**15.** Procédé selon l'une quelconque des revendications 12 à 14, comprenant en outre :

- piloter une platine mobile qui est couplée à l'optique à collimateur (215) pour décaler la platine entre une première position et une deuxième position,
dans lequel, dans la première position de la platine mobile, l'optique à collimateur (215) est positionnée sur le chemin optique (160, 161),
dans lequel la première position est associée à un mode de fonctionnement à champ lumineux du dispositif optique (101),
dans lequel la deuxième position est associée à un mode de fonctionnement de balayage laser du dispositif optique (101).

Stand der Technik

FIG. 1

EP 3 179 288 B1

FIG. 2

Stand der Technik

EP 3 179 288 B1

FIG. 3

FIG. 4

FIG. 5

FIG. 6

FIG. 7

```
┌─────────────────────────────────────────┐
│                                    1001  │
│     Ausführen Lichtfeld-Betriebsmodus    │
│                                          │
└─────────────────────────────────────────┘
                     │
                     ▼
┌─────────────────────────────────────────┐
│                                    1002  │
│   Bewegen der Bühne zwischen der ersten und │
│            zweiten Position              │
└─────────────────────────────────────────┘
                     │
                     ▼
┌─────────────────────────────────────────┐
│                                    1003  │
│   Ausführen Laser-Scanning-Betriebsmodus │
│                                          │
└─────────────────────────────────────────┘
```

FIG. 8

```
                                                         1001
                                                        ↙

┌────────────────────────────────────────────┐
│  Wähle erste Scanposition          1011      │
└────────────────────────────────────────────┘
                    │
                    ▼
┌────────────────────────────────────────────────────┐
│                                         1012         │
│  Ansteuern der Scanoptik, um aktuelle Scanposition zu aktivieren │
└────────────────────────────────────────────────────┘
                    │
                    ▼
┌────────────────────────────────────────────┐            ┌─────────────────────────────────────┐
│  Erhalten von Messdaten            1013      │            │ 1015      Wähle nächste Scanposition  │
└────────────────────────────────────────────┘            └─────────────────────────────────────┘
                    │                                                      ▲
                    ▼                                    JA                │
             ◇ Weitere Scanposition?   1014 ◇ ─────────────────────────────┘
                    │
                  NEIN
                    ▼
┌────────────────────────────────────────────┐
│                                         1016 │
│  Erzeugen der räumlich aufgelösten Abbildung des Objekts │
└────────────────────────────────────────────┘
```

FIG. 9

EP 3 179 288 B1

**EP 3 179 288 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140263963 A1

- DE 102013015931 A1

**In der Beschreibung aufgeführte Nicht-Patentliteratur**

- **BOUCHARD, MATTHEW B. et al.** Swept confocally-aligned planar excitation (SCAPE) microscopy for high-speed volumetric imaging of behaving organisms. *Nature photonics,* 2015, vol. 9 (2), 113-119